# EUROPÄISCHE PATENTSCHRIFT

(11) **EP 4 545 948 B1**
(45) Veröffentlichungstag und Bekanntmachung des Hinweises auf die Patenterteilung: **11.11.2026**
(21) Anmeldenummer: 24000126.3
(22) Anmeldetag: 22.10.2024
(51) Int. Cl.: G01N 21/55, G01N 21/84

(54) **INTERFERENZFREIE SPEKTRALE REFLEXIONSMESSUNG**
INTERFERENCE FREE SPECTRAL REFLECTANCE MEASUREMENT
MESURE DE RÉFLEXION SPECTRALE SANS INTERFÉRENCE

(30) Priorität: 26.10.2023 DE 102023129551
(43) Veröffentlichungstag der Anmeldung: 30.04.2025
(73) Patentinhaber: Rodenstock GmbH, 80687 München (DE)
(72) Erfinder: Scherschlicht, Rüdiger, 82008 Unterhaching (DE); Brunner, Hermann, 82234 Weßling (DE)

(56) Entgegenhaltungen:
- US-A1- 2012 327 414
- US-A1- 2014 195 189
- BOOBHUN JEFF T ET AL: "Short-wavelength infrared reflectance spectroscopy of minerals by supercontinuum illumination and speckle reduction", MINERALS ENGINEERING, ELSEVIER, AMSTERDAM, NL, vol. 156, 1 July 2020 (2020-07-01), XP086226517, ISSN: 0892-6875, [retrieved on 20200701], DOI: 10.1016/J.MINENG.2020.106528

## Beschreibung

Die vorliegende Erfindung betrifft ein Verfahren und eine Vorrichtung zur Reflexionsmessung an einer Oberfläche eines Gegenstands.

Optische Verfahren zur kontaktlosen Vermessung eines Gegenstands mittels Einstrahlens von Licht auf einen Gegenstand und das Detektieren des durch eine optisch wirksame Oberfläche des Gegenstands reflektierten Lichts sind in der Literatur bekannt.

Die Veröffentlichung "Short-wavelength infrared reflectance spectroscopy of minerals by supercontinuum illumination and speckle reduction" (Boobhun Jeff T et al, Minerals Engineering, Elsevier, Amsterdam, NL, Bd. 156, 1. Juli 2020 (2020-07-01), XP086226517, ISSN: 0892-6875, DOI: 10.1016/J.MINENG.2020.106528) beschreibt ein Messverfahren zur IR-spektroskopischen Reflexionsanalyse pulverisierter Proben mittels eines Breitband-IR-Lasers und widmet sich der Verringerung von Speckle, worunter körnige Muster verstanden werden, welche bei schrägwinkliger Bestrahlung einer rauen Probe mit kohärentem (Laser-)Licht entstehen und die Messung der diffusen Reflexion stark beeinflussen.

Die US 2012/327 414 A1 offenbart ein Messsystem und -verfahren zur Überwachung der Oberflächenrauheit von LED-Chips, wobei hieraus ein Verfahren bekannt ist, bei welchem mittels eines Prozessors ein gemitteltes Reflexionsvermögen berechnet wird.

Die US 2014 / 195189 A1 offenbart ein Computer-gestütztes Messystem, bei welchem spektrale Reflexionsdaten einer beschichteten Oberfläche gesammelt und anschließend eine Ausreißer-Analyse stattfindet, wobei mittels eines Prozessors Ausreißer-Daten aus den aufgenommenen spektralen Reflexionsdaten entfernt werden.

Es ist eine Aufgabe der vorliegenden Erfindung, ein Verfahren und eine entsprechende Vorrichtung zur Reflexionsmessung bereitzustellen, welche verbesserte Messergebnisse liefern.

Diese Aufgabe wird durch die unabhängigen Ansprüche gelöst, wobei bevorzugte Ausführungsformen den Gegenstand der abhängigen Ansprüche bilden. Die Erfindung ist hierbei durch die unabhängigen Ansprüche definiert.

Gemäß einem ersten Aspekt wird ein Verfahren zur Reflexionsmessung mittels einer Reflexionserfassungseinheit an einer Oberfläche eines zu messenden Gegenstands bereitgestellt, wobei das Verfahren umfasst:
Aufnehmen einer Streckenreflexionsmessung entlang einer Messstrecke entlang der Oberfläche mittels der Reflexionserfassungseinheit zur Erzeugung eines kumulierten Reflexions-Messsignals; und
Bereitstellen (zum Beispiel Ausgeben) des erzeugten kumulierten Reflexions-Messsignals als eine resultierende Reflexionsmessung,
wobei das Aufnehmen der Streckenreflexionsmessung ein Erzeugen einer relativen Bewegung zwischen der Reflexionserfassungseinheit und der Oberfläche entlang der Messstrecke umfasst.

Das Verfahren zur Reflexionsmessung gemäß dem ersten Aspekt stellt eine verbesserte Messmethode bereit, wobei diese Messmethode auf einer Streckenreflexionsmessung basiert, welche zum Beispiel kontinuierlich entlang einer Messstrecke auf der Oberfläche des zu messenden Gegenstands aufgenommen wird. Insbesondere werden bei einer solchen (insbesondere kontinuierlichen) Streckenreflexionsmessung Messwerte entlang der gesamten Messstrecke erfasst, wodurch das kumulierte Reflexions-Messsignal erzeugt wird. Dabei wird der Detektor zwischenzeitlich nicht ausgelesen. Es findet somit keine Aufnahme von separaten Einzelreflexionsmessungen an einzelnen Messpunkten oder Messpositionen statt, sondern es wird, in Analogie zu einer Langzeitbelichtung in der Fotographie, nur ein kumuliertes Reflexions-Messsignal erzeugt.

Mit anderen Worten werden bei einer solchen (insbesondere kontinuierlichen) Streckenreflexionsmessung, insbesondere kontinuierlich, während der Aufnahme Messwerte an einer Vielzahl von, vorzugsweise an allen, Messpositionen entlang der gesamten Messstrecke erfasst, wodurch das kumulierte Reflexions-Messsignal erzeugt wird. Das kumulierte Reflexions-Messsignal kann somit eine Superposition von Messsignalen bzw. Messwerten an allen Messpositionen entlang der gesamten Messstrecke sein. Mit anderen Worten kann das kumulierte Reflexions-Messsignal als genau eine Reflexionsmessung, insbesondere Streckenreflexionsmessung, über die gesamte Messstrecke erzeugt werden. Mittels der aufgenommenen Streckenreflexionsmessung bzw. mittels des entsprechend erzeugten kumulierten Reflexions-Messsignals kann eine resultierende Reflexionsmessung bereitgestellt werden. Erfindungsgemäß entspricht die resultierende Reflexionsmessung direkt dem kumulierten Reflexions-Messsignal, wodurch auf z.B. weitere Verrechnungen oder mathematische Aufbereitungen des kumulierten Reflexions-Messsignals verzichtet werden kann.

Insbesondere kann somit durch Kumulierung von Messwerten an einer Vielzahl von, insbesondere an allen, Messpositionen entlang der gesamten Messstrecke eine Abstraktion stattfinden und eine neue integrale spektrale Größe (die resultierende Reflexionsmessung) eingeführt und bestimmt werden, welche zumindest eine Eigenschaft des zu messenden Gegenstands besser beschreibt. Die neue Größe kann grundsätzlich weder mit dem Auge noch mit einer beliebigen Bildgebung erfasst werden, sondern sie wird aus dem gemäß dem Verfahren zur Reflexionsmessung erzeugten kumulierten Reflexions-Messsignal bestimmt. Im Unterschied zu bekannten Verfahren der Oberflächencharakterisierung, wie beispielsweise einem optischen und/oder insbesondere spektralen Messen bzw. Vermessen bzw. Charakterisieren einer Oberfläche des zu messenden Gegenstands durch eine optische bzw. spektrale Messung, bei der eine Zuordnung zwischen (aufgenommenem bzw. erfasstem) Messsignal und Aufnahmeposition/-ort des Messsignals möglich ist, beschreibt das kumulierte Reflexions-Messignal eine Eigenschaft des zu messenden Gegenstands in Abhängigkeit von der (gewählten) Messstrecke. Hierbei ist durch die kumulierte Aufnahme des Reflexions-Messignals keine Auflösung bzw. Zuordnung zwischen den, das kumulierte Reflexions-Messsignal in Superposition bildenden, Messsignalen entlang der Messstrecke und deren Aufnahmeposition/-ort möglich. Im Unterschied zu einer ortsaufgelösten (spektralen) Messung, welche eine Zuordnung von aufgenommenem Messsignal und Aufnahmeposition/-ort des Messsignals ermöglicht, muss diese Ortinformation nicht vorliegen, um eine integrale spektrale Größe zu erhalten, welche einen Bereich der Oberfläche oder die (gesamte) Oberfläche des zu messenden Gegenstands beschreibt und nicht nur einen bzw. mehrere ausgewählte Punkte. Auf diese Weise wird eine verbesserte Größe zur Charakterisierung einer Oberfläche eines zu messenden Gegenstands bereitgestellt, wodurch vorteilhafterweise eine Oberfläche eines zu messenden Gegenstands mit der nur einen einzelnen Größe des resultierenden (kumulierten) Reflexions-Messsignals beschrieben werden kann, anstatt auf eine Vielzahl einzelner Messsignale zurückgreifen zu müssen.

Ein besonderer Vorteil dieser Vorgehensweise ist der Erhalt einer weitgehend interferenzfreien oder interferenz-reduzierten Reflexionsmessung, insbesondere der Erhalt eines in Reflexion aufgenommenen Spektrums, welches geringe, reduzierte oder weitestgehend keine Interferenzen aufweist. Die Interferenzen können zum Beispiel aufgrund einer Variation des Brechungsindex und/oder aufgrund von anderen Effekten auftreten. Beispielsweise können die Interferenzen im Fall einer Beschichtung, wie zum Beispiel einer Hartlackbeschichtung, aufgrund des nicht (perfekt) angepassten Brechungsindex der Beschichtung auftreten.

Eine weitere mögliche Ursache für derartige Interferenzen neben Unterschieden im Brechungsindex können auch durch unterschiedliche Schichtdicken hervorgerufen werden, insbesondere wenn senkrecht zur Betrachtungs- bzw. Messrichtung eine Dickenvariation vorliegt, d. h. wenn sich dich Schichtdicke einer aufgebrachten Beschichtung entlang einer Richtung senkrecht zur Betrachtungs- bzw. Messrichtung unterscheidet bzw. variiert. Dies kann durch einen sogenannten Lackkeil hervorgerufen werden. Ein solcher Lackkeil kann beispielsweise im Rahmen einer Lackbeschichtung, z.B. von einem Hartlack, mittels eines Tauchbeschichtungsverfahrens auftreten. Durch ein wiederholtes Eintauchen und Ausziehen des zu lackierenden Glases während des Tauchbeschichtungsverfahrens kann sich eine keilförmige Lackschicht ausbilden. Mit anderen Worten kann die Lackschicht einen variablen, insbesondere in Auszugsrichtung zunehmenden bzw. entgegen der Auszugsrichtung abnehmenden, Dickenverlauf entlang der Auszugsrichtung aufweisen. Durch einen solchen variablen Dickenverlauf können Interferenzerscheinungen auftreten, wobei derartige Interferenzerscheinungen spektrale Reflexionsmessungen beeinflussen können und beispielsweise dazu führen können, dass spektrale Reflexionsmessungen an Gläsern aufweisend eine solche "keilförmige" Lack-Beschichtung in Kombination mit einer Entspiegelungsbeschichtung von Interferenzen behaftet sind.

Ein weiterer Vorteil des Verfahrens zur Reflexionsmessung gemäß dem ersten Aspekt ist es, dass eine Anordnung des zu messenden Gegenstands in einer bestimmten Lage und/oder Orientierung entfallen kann. Dies vereinfacht und beschleunigt wesentlich den Messvorgang.

Prinzipiell reicht es aus, wenn eine Bereitstellung der resultierenden Reflexionsmessung als das kumulierte Reflexions-Messsignal durchgeführt wird, wobei über eine oder mehrere Wiederholung(en) der Streckenreflexionsmessung eine höhere Genauigkeit im Hinblick auf das durch Wiederholung(en) verbesserte Signal-Rausch-Verhältnis erzielt werden kann. Mit anderen Worten kann das Verfahren ferner ein Wiederholen, insbesondere ein einfaches oder mehrfaches Wiederholen, der Aufnahme der Streckenreflexionsmessung zur Verbesserung eines Signal-Rausch-Verhältnisses umfassen. Jede der Wiederholungen umfasst hierbei insbesondere ein Aufnehmen einer Wiederholungs-Streckenreflexionsmessung, welche (zum Beispiel kontinuierlich) entlang der Messstrecke entlang der Oberfläche aufgenommen wird. Die wiederholten Streckenreflexionsmessungen können zum Beispiel addiert, gemittelt oder mittels eines anderen statistischen Verfahrens bearbeitet werden, um zum Beispiel ein verbessertes Signal-Rausch-Verhältnis zu erzielen.

Die Messtrecke der Streckenreflexionsmessung (und somit auch die jeweiligen Messpositionen entlang der Messstrecke) können geeignet gewählt werden. Beispielsweise kann bzw. können die Form, Länge und/oder Anordnung der Messtrecke auf dem zu messenden Gegenstand in Abhängigkeit von dem zu messenden Gegenstand und/oder von der zu erwartenden Periodizität des Interferenz- bzw. Streifenmusters gewählt bzw. festgelegt werden, Bei einem rotationssymmetrischen Gegenstand (wie zum Beispiel einer optischen Linse) können die Messtrecken radial in einem vorgegebenen Winkelbereich (der auch 360° umfassen kann) angeordnet werden. Es ist jedoch möglich, je nach Gegenstand, unterschiedliche Anordnungen von zumindest einer Messtrecke vorzusehen, wie zum Beispiel lineare Anordnungen, gitterförmigen Anordnungen, etc.

Das Verfahren zur Reflexionsmessung gemäß dem ersten Aspekt kann zum Beispiel angewendet werden bei der Analyse von Beschichtungen. Beispielsweise kann das Verfahren zur Reflexionsmessung bei der Analyse von Viellagen- bzw. Vielschichtensystemen, wie zum Beispiel interferometrischen Viellagen- bzw. Vielschichtensystemen angewendet werden. Das Verfahren zur Reflexionsmessung kann in diesem Fall von erheblichem Vorteil sein, da es ermöglicht, eine Reflexionsmessung zu erhalten, die die Beschichtung oder das Viellagen- bzw. Vielschichtensystem bestmöglich beschreibt und aus der zum Beispiel die wellenlängenbezogenen Lagen und/oder Reflexionshöhen von Extremwerten wie Minima und Maxima gut ablesbar bzw. erkennbar sind.

Das Verfahren zur Reflexionsmessung lässt sich auch vorteilhaft auf die Analyse von transparenten oder zumindest teilweise transparenten Beschichtungen anwenden, welche auf einem Lacksystem mit mindestens einer Lackschicht aufgebracht wurden. Die in der Reflexionsmessung zu sehenden Interferenzen können durch Brechwertunterschiede im Gesamtsystem zustandekommen. In einem solchen Fall ist es mit einem Verfahren nach dem Stand der Technik nahezu unmöglich, die tatsächliche Lage von Extrempunkten einer Reflexionsmessung zu erfassen. Beispielseise kann ferner eine Lackschicht (zum Beispiel eine Hartlackschicht) durch ein Tauchverfahren auf zumindest einer Oberfläche eines Gegenstands (zum Beispiel einer optischen Linse, insbesondere eines Brillenglases) aufgebracht werden. Typischerweise weist die so aufgebrachte Lackschicht eine keilförmige Variation (z.B. einen Lackkeil) der Dicke über dem Gegenstand auf, wie auch bereits weiter oben ausgeführt. Die Interferenzen werden in diesem Fall in erster Linie durch die Lackdicke und damit durch den keilförmigen Verlauf bzw. die "Keiligkeit" der Lackdicke verschoben. Insbesondere bei einem Lacksystem mit mindestens zwei Lackschichten bildet sich kein triviales Interferenzmuster aus, sondern es kann sich eine Schwebung ergeben, bedingt durch die durch die einzelnen Lackschichten hervorgerufenen Interferenzmodulationen. Bei mehreren Lackschichten kann das resultierende Interferenzmuster sehr komplex sein.

Mit dem vorliegenden Verfahren zur Reflexionsmessung können beliebige Gegenstände in Reflexion vermessen werden, wobei das Verfahren erfindungsgemäß für optische Gegenstände und bevorzugt für Linsen, insbesondere für Brillengläser geeignet ist. Insbesondere kann der zu messende Gegenstand zumindest teilweise transparent sein. Das bedeutet, dass der zu messende Gegenstand nicht über die gesamte Erstreckung der zu messenden Oberfläche transparent zu sein braucht, sondern beispielsweise zumindest einen nicht-transparenten Bereich (wie zum Beispiel einen nicht transparenten Randbereich) aufweisen kann. Ferner ist es nicht notwendig, dass eine vollständige Transparenz vorliegt.

Der zu messende Gegenstand kann zusätzlich zu einer ersten, zu messenden Oberfläche eine der ersten Oberfläche gegenüberliegende zweite Fläche (Rückfläche) aufweisen. Die erste und/oder die zweite Oberfläche kann bzw. können optisch wirksame Oberflächen sein. Beispielsweise kann die erste, zu messende Oberfläche die Vorder- oder die Rückfläche einer optischen Linse, wie zum Beispiel eines Brillenglases sein.

Im Allgemeinen gilt es bei Reflexionsmessungen an einem Gegenstand mit einer Vorder- und einer Rückfläche zu beachten, dass bei Messungen an einer der beiden Flächen keine rückreflektierten Strahlen der jeweils anderen Fläche die Messungen beeinträchtigen bzw. verfälschen. Die Vorderfläche und die Rückfläche können hierbei beispielsweise als zwei im Wesentlichen bezüglich des Gegenstands gegenüberliegende Außenflächen des Gegenstands verstanden werden.

Im Falle eines nicht-transparenten Gegenstands bzw. eines Gegenstands, der ein nichtvernachlässigbares Absorptionsvermögen aufweist, kann die geringe Transmission des Gegenstands bereits dazu führen, dass entstehende Rückreflexe derart abgeschwächt werden, dass diese bei Messungen an der Vorderseite nicht mehr detektiert werden.

Im Falle eines transparenten Gegenstands stellen sich dem Fachmann unter anderem diese Möglichkeiten:
- Vorbehandeln des zu messenden transparenten Gegenstands, und/oder
- Auf die Messsituation speziell angepasste Messsysteme, und/oder
- Verwendung eines speziell beschaffenen Gegenstands, und/oder
- Berücksichtigung der zusätzlich detektierten rückreflektierten Strahlen der jeweiligen Rückfläche.

Als Vorbehandlung sind dem Fachmann beispielsweise das Aufrauen bzw. Mattieren der jeweiligen Rückfläche bekannt, um ein diffuses Streuverhalten zu erzielen, welches das Auftreten von gebündelten, detektierbaren Rückreflexen unterbindet. Dies kann durch ein optionales, anschließendes Schwärzen der aufgerauten bzw. mattierten Rückfläche noch weiter optimiert werden. Ein solches Schwärzen kann beispielsweise durch Auftragen einer schwarzen Tinte oder durch Bekleben mit einem schwarzen Klebeband erreicht werden. Ebenfalls ist es möglich, eine reflexionsmindernde Schicht ohne vorheriges Aufrauen bzw. Mattieren aufzubringen, um störende Rückseitenreflexe bei der bzw. den Streckenreflexionsmessung(en) zu unterdrücken.

Generell kann eine derartige Vorbehandlung wahlweise vollflächig, das heißt auf der gesamten Rückfläche erfolgen, oder sie kann z.B. teilflächig erfolgen, insbesondere entlang der bzw. im Wesentlichen parallel zu den Messstrecken, entlang derer vorderseitig Messungen durchgeführt werden sollen. Die Vorbehandlung kann ferner automatisiert erfolgen.

Unter der Verwendung eines speziell beschaffenen Gegenstands wird beispielsweise die Verwendung eines Gegenstands (wie zum Beispiel einer Linse und insbesondere eines Brillenglases) verstanden, welcher auf einer der beiden Flächen einen höheren Krümmungsradius als auf der jeweils anderen Fläche aufweist. Auf diese Weise wird dafür gesorgt, dass an der jeweils anderen Fläche entstehende Rückreflexe nicht mit den zu messenden Reflexen der Vorderseite zusammenfallen. Alternativ oder zusätzlich kann auch eine Linse (wie zum Beispiel ein Brillenglas) verwendet werden, welche eine prismatische Wirkung aufweist, wodurch ebenfalls ein unterschiedlicher, im Allgemeinen nicht paralleler Strahlengang zwischen zu detektierenden Reflexen der Vorderseite und störenden Reflexen der jeweiligen Rückseite erreicht wird. Auf diese Weise werden die störenden Rückreflexe weitgehend nicht mehr detektiert.

Unter der Berücksichtigung der zusätzlich detektierten rückreflektierten Strahlen wird verstanden, dass diese wahlweise bekannt sind, systematischer und/oder systemischer Natur sind und/oder bestimmbar sind bzw. vor Messungen an der Vorderseite bestimmt wurden und anschließend aus den Messungen der Vorderseite herausgerechnet werden können. Auf diese Weise können beispielsweise bei bekannter Beschaffenheit der Rückfläche, zum Beispiel bei Kenntnis einer rückflächig aufgebrachten Beschichtung und deren Reflexionsverhaltens, die zusätzlich von der Rückfläche rückreflektierten und ebenfalls detektierten Signale herausgerechnet werden. Bei einer unbeschichteten Rückfläche können die zusätzlich von der Rückfläche rückreflektierten und ebenfalls detektierten Signale eine systematische und/oder systemische Abweichung darstellen. Nachdem die Abweichung einmal bestimmt wurde, können diese weiteren Messungen jeweils herausgerechnet werden.

Für eine Reflexionsmessung, insbesondere eine Streckenreflexionsmessung, wird Licht aus einer Lichtquelle auf eine Messposition auf der zu messenden (z.B. ersten) Oberfläche des Gegenstands eingestrahlt. Das eingestrahlte Licht wird an der zu messenden Oberfläche zumindest teilweise reflektiert. Zumindest ein Teil des reflektierten Lichts wird von einem Detektor detektiert. Während einer Streckenreflexionsmessung werden sequenziell (zum Beispiel kontinuierlich) alle Messpositionen einer jeweiligen Messtrecke mit Licht aus der Lichtquelle bestrahlt und die entsprechenden Teile des reflektierten Lichts von dem Detektor kumuliert aufgezeichnet bzw. detektiert, während eine relative Bewegung zwischen zumindest Detektor und Oberfläche erzeugt wird. Im Unterschied zu Einzelreflexionsmessungen an unterschiedlichen Messpositionen auf einer Oberfläche findet bei der vorliegenden Erfindung eine relative Bewegung zwischen Reflexionserfassungseinheit und Oberfläche, insbesondere zwischen zumindest Detektor und Oberfläche, während der Aufnahme der Messung (Streckenreflexionsmessung) statt. Vorzugsweise wird der Detektor während der Aufnahme der Streckenreflexionsmessung nicht ausgelesen, sondern erst nach Abschluss der Aufnahme der Streckenreflexionsmessung. Insbesondere kann somit das kumulierte Reflexions-Messsignal erst nach Abschluss der Streckenreflexionsmessung vorliegen. Hierdurch wird basierend auf dem teilweise reflektierten Licht ein über die gesamte Messtrecke kumuliertes Reflexions-Messsignal erzeugt. Mit anderen Worten kann das kumulierte Reflexions-Messsignal eine Superposition aller über die Messstrecke aufgezeichneten bzw. detektierten Messsignale darstellen. Im vorstehenden Fall weist das kumulierte Reflexions-Messsignal im Unterschied zu an verschiedenen Positionen aufgenommenen Einzelreflexionsmessungen keine Ortsinformation auf, da im kumulierten Reflexions-Messsignal eine Superposition der über die Messstrecke aufgezeichneten Messsignale vorliegt, d.h. es kann im aufgenommenen Messsignal nur eine Zuordnung zu der Messstrecke und nicht zu einzelnen Punkten stattfinden. Das Emissionsspektrum der Lichtquelle kann passend zum spektralen Messbereich gewählt werden. Insbesondere umfasst das Emissionspektrum der Lichtquelle Wellenlängen von etwa 400nm bis etwa 800nm, bevorzugt 480nm bis etwa 750nm, weiter bevorzugt etwa 500 nm bis etwa 700nm. Bevorzugt ist das Emissionsspektrum kontinuierlich. Mit anderen Worten ist das Emissionsspektrum der Lichtquelle nicht monochrom.

Der Detektor kann zur wellenlängen-abhängigen Detektion des Reflexionsgrades der zu vermessenden Oberfläche ausgelegt sein. Der Detektor kann ein beliebiger Detektor sein, wie zum Beispiel ein Zeilendetektor sein. Insbesondere kann der Detektor ausgebildet sein, ein komplettes Reflexionsspektrum in einem bestimmten Spektralbereich möglichst schnell (vorzugweise instantan oder in Echtzeit) und von jeder Messposition entlang der Messstrecke zu erfassen.

Lichtquelle und Detektor können relativ zueinander fixiert sein und/oder können in einer gemeinsamen Messeinheit, beispielsweise einer Reflexionserfassungseinheit, ausgebildet sein. Im Rahmen einer Streckenreflexionsmessung wird eine relative Bewegung zwischen dem zu messenden Gegenstand und z.B. der Reflexionserfassungseinheit erzeugt, um zum Beispiel kontinuierlich alle Messpositionen der Messtrecke mit Licht aus der Lichtquelle zu bestrahlen und um die entsprechenden Teile des reflektierten Lichts von dem Detektor kumuliert aufzuzeichnen bzw. zu detektieren.

Anhand des detektierten Signals, insbesondere anhand des kumulierten Reflexions-Messsignals, kann zumindest ein Reflexionswert für zumindest eine Wellenlänge ermittelt werden. Es ist möglich, Reflexionswerte für mehrere Wellenlängen zu ermitteln, zum Beispiel für Wellenlängen in einem vorgegebenen oder vorgebbaren spektralen Bereich. Eine Reflexionsmessung, insbesondere eine Streckenreflexionsmessung, kann demzufolge Reflexionswerte für mehrere Wellenlängen enthalten. Insbesondere kann eine Reflexionsmessung, insbesondere eine Streckenreflexionsmessung, ein Reflexionsspektrum liefern, welches den Reflexionswert als Funktion der Wellenlänge beschreibt bzw. darstellt. Das Bereitstellen der resultierten Reflexionsmessung kann dementsprechend ein Bereitstellen eines resultierenden Reflexionswerts für zumindest eine Wellenlänge, optional für mehrere Wellenlängen in einem (zumindest teilweise diskreten und/oder zumindest teilweise durchgehenden) Wellenlängenintervall (Spektralintervall) umfassen.

Unter Licht wird im Rahmen der vorliegenden Anmeldung jede Form von elektromagnetischer Strahlung verstanden. Das Verfahren kann für beliebige Spektralbereiche angewendet werden und die Auswahl eines geeigneten Teilbereichs der elektromagnetischen Strahlung hängt von der konkreten Messsituation ab. Beispielsweise ist es für die Charakterisierung von Brillengläsern und auf deren Oberfläche(n) aufgebrachten Beschichtungen von besonderem Vorteil, die Charakterisierung im sichtbaren Spektralbereich, möglicherweise ausgedehnt auf den UV-Bereich und/oder den IR-Bereich, durchzuführen. Das zur Messung verwendete Licht kann beispielsweise weißes bzw. sichtbares Licht sein oder eine bestimmte Wellenlänge oder Wellenlängenbereich aufweisen. Beispielsweise kann das Licht in einem Wellenlängenbereich von 380 nm bis 800 nm oder von 400 nm bis 780 nm liegen. Es können aber auch andere und/oder engere Wellenlängenbereiche verwendet werden, beispielsweise ultraviolettes Licht (UV-C: 100 bis 280 nm, UV-B: 280 bis 315 nm und/oder UV-A: 315 bis 380 nm), violettes Licht mit 380 bis 450 nm, blaues Licht mit 450 bis 495 nm, grünes Licht mit 495 bis 570 nm, gelbes Licht mit 570 bis 590 nm, oranges Licht mit 590 bis 620 nm, rotes Licht 620 bis 750 nm, infrarotes Licht (IR-A: 780 bis 1400 nm und/oder IR-B: 1400 bis 3000 nm) oder Mischungen davon.

Vorzugsweise ist die Lichtquelle nicht monochromatisch ausgelegt, d.h. das Emissionsspektrum der Lichtquelle weist elektromagnetische Strahlung verschiedener Frequenzen auf, bevorzugt weist die Lichtquelle ein sich über mehrere bzw. eine Vielzahl von Frequenzbereichen erstreckendes Emissionsspektrum elektromagnetischer Strahlung auf, wodurch insbesondere in Kombination mit einem Detektor, welcher geeignet ist ein spektral aufgelöstes Reflexions-Messsignal zu erfassen, eine spektral aufgelöste Streckenreflexionsmessung aufgenommen werden kann, wodurch insbesondere ein spektral aufgelöstes, kumuliertes Reflexions-Messsignal als eine spektral aufgelöste resultierende Reflexionsmessung aufgenommen bzw. erzeugt werden kann.

Vorzugsweise kann nach Aufnahme der Streckenreflexionsmessung eine Korrektur der Streckenreflexionsmessung stattfinden. Das Verfahren zur Reflexionsmessung an einer Oberfläche kann dementsprechend eine Korrektur der Streckenreflexionsmessung umfassen.

Die Korrektur kann beispielsweise ein Normieren, ein Glätten und/oder eine andere Korrektur sein bzw. umfassen. Die Korrektur kann mindestens zwei Korrekturen umfassen.

Die Korrektur kann vorzugsweise ein Berechnen von Farbwerten nach Norm für die Streckenreflexionsmessung und/oder für die resultierende Reflexionsmessung umfassen. Die für die Streckenreflexionsmessung und/oder für die resultierende Reflexionsmessung berechneten Farbwerte können optional in RGB-Farbwerte umgerechnet werden. Ferner kann in einer Draufsichtdarstellung des zu messenden Gegenstands die Messstrecke der Streckenreflexionsmessung entsprechend der entlang dieser Messstrecke ermittelten Farbwerte (wie zum Beispiel RGB-Farbwert) eingefärbt bzw. gekennzeichnet werden.

Die Korrektur einer aufgenommenen Streckenreflexionsmessung bzw. eines erzeugten kumulierten Reflexions-Messsignals und/oder der resultierenden Reflexionsmessung kann beispielsweise ein Normieren auf bzw. Referenzieren mit einem aufgenommenen und/oder vorgegebenen Reflexionsstandard mit bekanntem Reflexionsvermögen bzw. -verhalten (z.B. BK-7, SF-6) umfassen. Das Normieren bzw. Referenzieren kann hierbei insbesondere eine Normierungsmessung an dem Reflexionsstandard umfassen. Bei der Normierungsmessung an dem Reflexionsstandard ist insbesondere, im Gegensatz zur Streckenreflexionsmessung, keine relative Bewegung zwischen Reflexionsstandard und Reflexionserfassungseinheit notwendig, da die Annahme gemacht werden kann, dass der Reflexionsstandard eine homogene Oberfläche und keine Interferenzerscheinungen aufweist. Folglich liegt in der Regel eine Isotropie hinsichtlich der Messposition in Bezug auf den Reflexionsstandard vor, woraus folgt, dass die Referenzmessung an einer beliebigen Position auf der Oberfläche des Reflexionsstandards aufgenommen werden kann.

Insbesondere kann eine Messdauer der Normierungsmessung identisch zu einer Messdauer der Streckenreflexionsmessung sein. Vorzugsweise kann die Normierungsmessung nach der Streckenreflexionsmessung durchgeführt werden, wobei die Messdauer der Normierungsmessung gleich der Messdauer der vorangegangenen Streckenreflexionsmessung gesetzt wird.

Alternativ oder zusätzlich kann die Korrektur ein Glätten der resultierenden Reflexionsmessung und/oder der Streckenreflexionsmessung bzw. des kumulierten Reflexions-Messsignals umfassen. Geeignete Glättungsverfahren sind einem Fachmann bekannt. Beispielhafte Glättungsverfahren sind Tiefpass-Filterverfahren, wie beispielsweise Tschebyscheff-Filter, oder auch Polynom-Fit-Verfahren.

Insbesondere kann der zu messende Gegenstand mit zumindest einer Lackschicht versehen sein, wobei typischerweise die aufgebrachte Lackschicht eine keilförmige Variation der Dicke (z.B. als Lackkeil, wie bereits oben diskutiert), und somit insbesondere unterschiedliche Lackdicken, über dem Gegenstand aufweist. Hierbei kann beispielsweise eine Messstrecke derart festgelegt bzw. vorgegeben werden, dass diese im Wesentlichen gleiche Anteile der unterschiedlichen Lackdicken enthält. Eine besonders vorteilhafte Messstrecke kann daher hierfür eine Messstrecke entlang einer Linie und/oder Geraden über den Lackkeil sein. Eine entsprechende relative Ausrichtung (insbesondere hinsichtlich Lage und/oder Orientierung) zwischen der Reflexionserfassungseinheit und dem zu messenden Gegenstand kann beispielsweise wie hierin beschrieben erreicht werden.

Die Messstrecke kann in mehrere Abschnitte unterteilt werden. Die Messstrecke kann insbesondere zumindest einen Nicht-Berücksichtigungs-Abschnitt und zumindest einen Berücksichtigungsabschnitt aufweisen. Der Nicht-Berücksichtigungs-Abschnitt kann hierbei ein Abschnitt der Messstrecke sein, entlang welchem der Detektor kein Messsignal von der Oberfläche aufzeichnet. Dies kann, z.B. mit entsprechend angesteuerten Blenden vor dem Detektor bewirkt werden. Mit anderen Worten kann der Detektor zumindest eine Blende aufweisen, welche ausgelegt ist, ein Auftreffen von Licht auf den Detektor entlang des zumindest einen Nicht-Berücksichtigungs-Abschnitt zu verhindern. Der Detektor ist jedoch nicht auf solche Blenden beschränkt, sondern es können auch, zusätzlich oder alternativ, weitere Elemente mit entsprechend gleicher Wirkung vorgesehen werden.

Der zumindest eine Berücksichtigungsabschnitt kann hierbei ein Abschnitt der Oberfläche bzw. der Messstrecke sein, entlang welchem der Detektor zumindest ein Messsignal von der Oberfläche aufzeichnet. Jeder Berücksichtigungsabschnitt kann hierbei insbesondere eine unendliche Anzahl von Messpunkten der Messstrecke umfassen. Eine Auslesung des Detektors bzw. Erzeugung des kumulierten Reflexions-Messsignals kann weiterhin erst nach vollendeter Streckenreflexionsmessung bzw. am Ende der Messstrecke erfolgen. Ein Beispiel für einen Nicht-Berücksichtigungs-Abschnitt kann ein ausgezeichneter Abschnitt sein, in welchem keine große Variation in Bezug auf einen vorhandenen Lackkeil zu erwarten ist. Ein Nicht-Berücksichtigungs-Abschnitt kann beispielsweise ein Streckenabschnitt sein, welcher senkrecht zur Auszugsrichtung im Rahmen einer Lackbeschichtung angeordnet ist, da in einem solchen senkrechten Bereich keine Interferenzerscheinungen durch unterschiedlicher Lackdicke hervorgerufen werden können, da diese im Wesentlichen konstant ist entlang einer Richtung, welche im Wesentlichen senkrecht zur Auszugsrichtung ist. Die Festlegung der einzelnen Abschnitte der Messstrecke, wie zum Beispiel zumindest eines nicht-Berücksichtigungs-Abschnitts und zumindest eines Berücksichtigungsabschnitts, kann auf Basis von Vorkenntnissen oder Vorhersagen zu dem zu messenden Gegenstand erfolgen.

Die Messstrecke für die Streckenreflexionsmessung kann fest vorgegeben sein. Daher kann das Verfahren zur Reflexionsmessung ferner einen Schritt eines Vorgebens bzw. Festlegens der Messstrecke umfassen. Das Festlegen der Messstrecke kann hierbei zumindest teilweise manuell und/oder zumindest teilweise automatisch, vorzugsweise voll-automatisch, erfolgen.

Hierbei kann das Festlegen der Messstrecke beispielsweise ein Festlegen der Messstrecke durch den Bediener umfassen. Beispielsweise kann der Bediener für den zu messenden Gegenstand und/oder für alle dem zu messenden Gegenstand geometrisch ähnlichen (insbesondere im mathematischen Sinne geometrisch ähnlichen) Gegenstände die Messstrecke festlegen bzw. vorgeben. Hierdurch kann ein besonders zuverlässiges und/oder ein individuell auf den jeweiligen zu messenden Gegenstand angepasstes Verfahren zur Reflexionsmessung bereitgestellt werden.

Das Festlegen der Messstrecke kann alternativ oder zusätzlich umfassen:
- ein Bestimmen einer Form der Oberfläche und/oder einer Form des zu messenden Gegenstands, beispielsweise mittels einer Bilderfassungseinheit; und
- ein Bestimmen und/oder Berechnen der Messstrecke basierend auf zumindest der Form der Oberfläche und/oder der Form des zu messenden Gegenstands.

Das Bestimmen der Form der Oberfläche und/oder des zu messenden Gegenstands kann hierbei insbesondere durch ein Vorgeben der jeweiligen Form, beispielsweise durch Abrufen von Form-Informationen bezüglich des zu messenden Gegenstands, z.B. aus einer Datenbank, umfassen. Hierbei kann der zu messende Gegenstand beispielsweise identifiziert werden, z.B. anhand von einem oder mehreren charakteristischen Merkmalen (wie weiter unten beschrieben), und folglich können die entsprechenden Informationen bzw. die entsprechende Form der Oberfläche und/oder des zu messenden Gegenstands bzw. die entsprechenden Form-Informationen abgerufen werden. Alternativ kann die Form der Oberfläche und/oder des zu messenden Gegenstands durch den Bediener vorgegeben werde.

Alternativ kann die Form der Oberfläche und/oder des zu messenden Gegenstands mittels einer Messeinheit erfasst werden. Die Messeinheit kann hierbei beispielsweise eine Bilderfassungseinheit oder eine Oberflächenabtasteinheit sein.

Das Bestimmen und/oder Berechnen der Messstrecke kann hierbei ferner ein Bestimmen der Messstrecke, beispielsweise durch Abrufen von Messstrecken-Informationen basierend auf zumindest der Form der Oberfläche und/oder der Form des zu messenden Gegenstands, z.B. aus einer Datenbank, umfassen. Insbesondere kann in der Datenbank für eine entsprechende Form der Oberfläche und/oder des zu messenden Gegenstands die Messstrecke, insbesondere als Messstrecken-Informationen, hinterlegt sein.

Alternativ oder zusätzlich kann das Bestimmen und/oder Berechnen der Messstrecke ein Berechnen, vorzugsweise ein automatisiertes Berechnen der Messstrecke umfassen. Hierbei kann beispielsweise basierend auf der Form der Oberfläche und/oder des zu messenden Gegenstands ein Messstrecken-Algorithmus durchgeführt werden, um die Messstrecke zu bestimmen bzw. zu berechnen. Ein Beispiel für einen derartigen Messstrecken-Algorithmus kann hierbei ein Coverage Path Planning (CPP) Algorithmus sein, wobei dieses Beispiel jedoch nicht als beschränkend zu verstehen ist. Vielmehr können eine Vielzahl von verschiedenen Messstrecken-Algorithmen angewendet werden, um die Messstrecke zu berechnen.

Insbesondere kann durch ein derartiges Festlegen der Messstrecke ein besonders effizientes Verfahren zur Reflexionsmessung bereitgestellt werden, bei welchem z.B. keine weiteren Eingriffe des Bedieners und/oder Vorkenntnisse zu dem zu vermessenden Gegenstand notwendig sind.

Alternativ oder zusätzlich kann auch die Messstrecke während der Aufnahme der entsprechenden Streckenreflexionsmessung dynamisch festgelegt werden.

Bei einem dynamischen Festlegen der Messstrecke kann beispielsweise ein Messstrecken-Startpunkt auf der Oberfläche bestimmt, vorgeben und/oder zufällig ermittelt werden. Ausgehend von dem Messstrecken-Startpunkt kann die jeweilige Messstrecke, insbesondere abschnittsweise, während der Aufnahme der entsprechenden Streckenreflexionsmessung festgelegt werden. Hierdurch sind insbesondere weder Eingriffe des Bedieners noch Vorkenntnisse zu dem zu vermessenden Gegenstand notwendig. Ein Beispiel für ein solches dynamisches Festlegen kann ein Festlegen einer Messstrecke als Brownsche Bewegung (z.B. als geometrische Brownsche Bewegung) während der Aufnahme der Streckenreflexionsmessung sein. Alternativ können auch andere Streckenalgorithmen bzw. Strecken-bildende Algorithmen angewendet werden.

Die Messstrecke kann alternativ oder zusätzlich ferner festgelegt bzw. vorgegeben werden, so dass keine Wiederholungsmessungen bzw. keine Überlappungen der Messstrecke mit sich selbst stattfinden.

Die Messstrecke kann alternativ oder zusätzlich ferner festgelegt bzw. vorgegeben werden, so dass die Messstrecke zumindest teilweise entlang, vorzugsweise parallel zu, einer bestimmten Richtung des zu messenden Gegenstands ist bzw. verläuft. Beispielsweise kann bei einem zu messenden Gegenstand, der eine keilförmige Veränderung der Dicke des Gegenstands und/oder der Dicke zumindest einer Beschichtung (z.B. einer Lackschicht) des Gegenstands aufweist, die Messstrecke parallel zur Keilrichtung festgelegt bzw. vorgegeben werden. Die Messstrecke kann hierbei vorzugsweise eine Linie bzw. eine Gerade, insbesondere entsprechend einer keilförmigen Veränderung der Dicke zumindest einer Lackschicht (z.B. einem Lackkeil), über den zu messenden Gegenstand, z.B. ein Brillenglas, sein. Zusätzlich oder alternativ kann anhand von Markierungen oder anderen dem Gegenstand inhärenten Merkmalen (z.B. charakterisierenden Merkmalen) automatisch bestimmt werden, entlang welcher Messstrecke eine Streckenreflexionsmessung aufgenommen werden soll.

Die Messstrecke kann insbesondere in zumindest zwei räumlichen Dimensionen parametrisiert sein, wobei parametrisiert insbesondere festgelegt oder beschrieben oder charakterisiert meint, und eine solche Parametrisierung in Bezug auf ein Koordinatensystem erfolgt. Der Fachmann kann in Abhängigkeit von der Messstrecke und/oder von der Oberflächenform des zu messenden Gegenstands, insbesondere in Bezug auf deren geometrischer Form oder Komplexität, ein bevorzugt geeignetes Koordinatensystem (beispielsweise kartesisch, polar oder sphärisch) mit geeignet gewähltem Koordinatenursprung wählen. Beispielsweise kann die Messstrecke eine Messstrecke parametrisiert in zwei Dimensionen und entlang der Oberfläche angeordnet sein. Beispiele hierfür können zwei-dimensionale Geraden und Kurven sein, wobei Geraden im Allgemeinen durch Festlegen eines Start- und eines Endpunktes parametrisiert sind, wohingegen Kurven beispielsweise als Funktionen oder als eine Punktemenge charakterisiert werden, wobei eine solche Punktemenge zusätzlich zu Start- und Endpunkt noch eine Mehrzahl weiterer Punkte enthält, durch welche die Kurve verläuft. Als ein alternatives Beispiel kann die Messstrecke eine Messstrecke in drei Dimensionen entlang der Oberfläche sein. Beispiele hierfür können Messstrecken als Kurven entlang komplexer, dreidimensionaler bzw. nichtplanarer Oberflächen sein. Hierbei kann die Messstrecke die gleiche räumliche Dimension aufweisen oder unterschiedliche räumliche Dimensionen wie die Oberfläche aufweisen.

Ferner kann das Verfahren zur Reflexionsmessung ein Festlegen zumindest eines Messparameters umfassen, wobei insbesondere das Aufnehmen der Streckenreflexionsmessung ein Aufnehmen der Streckenreflexionsmessung basierend auf dem zumindest einen Messparameter sein kann. Hierdurch kann beispielsweise eine besonders effiziente und zuverlässige Reflexionsmessung bewirkt werden, da anhand der Messparameter eine an die jeweilige Messsituation und/oder an den jeweiligen zu messenden Gegenstand angepasste Reflexionsmessung ermöglicht wird. Insbesondere kann für die Streckenreflexionsmessung bzw. die Messstrecke eine Menge von Messparametern festgelegt bzw. vorgegeben werden.

Das Aufnehmen der Streckenreflexionsmessung erfolgt mittels einer Reflexionserfassungseinheit bzw. wird mittels der Reflexionserfassungseinheit durchgeführt. Die Reflexionserfassungseinheit kann hierbei insbesondere einen Detektor aufweisen. Der Detektor kann insbesondere ausgelegt sein, um während einer jeweiligen Streckenreflexionsmessung von dem zu messenden Gegenstand reflektiertes Licht kumuliert zu detektieren. Beispielsweise kann der Detektor einen CCD-Detektor und/oder einen CMOS-Detektor aufweisen.

Die Reflexionserfassungseinheit und/oder der Detektor kann hierbei insbesondere einen Sättigungsschwellenwert aufweisen. Der Sättigungsschwellenwert kann hierbei insbesondere indikativ für eine maximale Signalaufzeichnungskapazität der Reflexionserfassungseinheit und/oder des Detektors während einer Streckenreflexionsmessung sein. Mit anderen Worten kann bei Überschreitung des Sättigungsschwellenwerts eine Sättigung und/oder Übersteuerung der Reflexionserfassungseinheit bzw. des Detektors auftreten. Der Sättigungsschwellenwert kann beispielsweise einer Full-Well-Kapazität der Reflexionserfassungseinheit und/oder des Detektors entsprechen.

Insbesondere kann der zumindest eine Messparameter derart festgelegt werden, dass während der Aufnahme der Streckenreflexionsmessungen basierend auf dem zumindest einen Messparameter der Sättigungsschwellenwert nicht überschritten wird. Hierdurch kann eine besonders zuverlässige Streckenreflexionsmessung ermöglicht werden. Insbesondere kann der zumindest eine Messparameter derart festgelegt werden, dass während der Aufnahme der Streckenreflexionsmessung basierend auf dem zumindest einen Messparameter der Sättigungsschwellenwert erreicht aber nicht überschritten wird. Hierdurch kann z.B. eine maximale Signalausbeute während den jeweiligen Streckenreflexionsmessungen ermöglicht werden. Insbesondere kann die Streckenreflexionsmessung basierend auf dem zumindest einen Messparameter aufgenommen werden, bis der Sättigungsschwellenwert erreicht ist. Hierdurch kann von einer festen Vorgabe einiger Messparameter, z.B. einer Messdauer, abgesehen werden, wodurch eine Einfachheit und Anwendbarkeit des Verfahrens verbessert wird.

Das Aufnehmen der Streckenreflexionsmessung umfasst ferner ein Erzeugen einer relativen Bewegung zwischen der Reflexionserfassungseinheit und der Oberfläche entlang der Messstrecke. Hierzu kann beispielsweise eine entsprechende Aktuatoreinheit vorgesehen sein, welche ausgelegt ist entweder den zu messenden Gegenstand, oder die Reflexionserfassungseinheit, oder den zu messenden Gegenstand und die Reflexionserfassungseinheit zu bewegen. Beispielsweise kann eine exemplarische Messstrecke zumindest teilweise kreisförmig entlang der Oberfläche eines Brillenglases zentriert um dessen Mittelpunkt sein. Ferner kann die exemplarische Messstrecke entlang des Randbereichs des Brillenglases angeordnet sein bzw. einen größeren Radius aufweisen. Die relative Bewegung entlang der exemplarischen Messstrecke kann hierbei insbesondere durch Anordnung der Reflexionserfassungseinheit über der exemplarischen Messstrecke und eine darauffolgende Rotation des Brillenglases, z.B. eine volle oder halbe Rotation, unter der Reflexionserfassungseinheit erfolgen.

Der zumindest eine Messparameter kann hierbei ferner eine Geschwindigkeit der relativen Bewegung, z.B. eine Abtastgeschwindigkeit entlang der Messstrecke, umfassen. Insbesondere kann für die Messstrecke eine konstante Geschwindigkeit der relativen Bewegung vorgegeben werden.

Alternativ kann die Geschwindigkeit der relativen Bewegung auch variabel entlang der Messstrecke vorgegeben werden. Hierbei kann die Geschwindigkeit der relativen Bewegung beispielsweise als eine Funktion einer Position entlang der Messstrecke vorgegeben sein. Alternativ oder zusätzlich kann die Geschwindigkeit der relativen Bewegung als eine Funktion einer Position auf der Oberfläche des zu messenden Gegenstands vorgegeben sein. Hierdurch kann insbesondere eine zusätzliche Gewichtung bei der Erzeugung des kumulierten Reflexions-Messignals ermöglicht werden, ohne dass eine weitere entsprechende rechnerische Verarbeitung notwendig ist. So kann für Bereiche der Messstrecke und/oder des zu messenden Gegenstands, welchen eine höhere Gewichtung zukommen soll (z.B. einem Zentralbereich eines Brillenglases), eine niedrigere Geschwindigkeit der relativen Bewegung zugeordnet bzw. vorgegeben werden. Ebenfalls kann für Bereiche der Messstrecke und/oder des zu messenden Gegenstands, welchen eine niedrigere Gewichtung zukommen soll (z.B. einem äußeren Randbereich eines Brillenglases), eine höhere Geschwindigkeit der relativen Bewegung zugeordnet bzw. vorgegeben werden.

Alternativ kann die Messstrecke in zumindest einen ersten Geschwindigkeitsbereich und zumindest einen zweiten Geschwindigkeitsbereich aufgeteilt sein. Der erste Geschwindigkeitsbereich kann einem Bereich entsprechen, in dem beispielsweise keine große Ortsabhängigkeit (z.B. mit geringen Interferenzerscheinungen) erwartet wird. Folglich kann ein erster Geschwindigkeitswert der relativen Bewegung für diesen ersten Geschwindigkeitsbereich festgelegt werden. Der zweite Geschwindigkeitsbereich kann beispielsweise einem Bereich entsprechen, in dem größere Ortsabhängigkeit (z.B. mit größeren Interferenzerscheinungen) erwartet wird. Folglich kann ein zweiter Geschwindigkeitswert der relativen Bewegung für diesen zweiten Geschwindigkeitsbereich festgelegt werden. Hierbei kann der erste Geschwindigkeitswert größer sein als der zweite Geschwindigkeitswert. Basierend auf derartigen ersten und zweiten Geschwindigkeitswerten kann der zweite Geschwindigkeitsbereich der Messstrecke aufgrund der darin enthaltenen Informationen mit verringerter Geschwindigkeit vermessen werden.

Ferner kann die Reflexionserfassungseinheit beispielsweise eine Lichtquelle zur Bestrahlung der Oberfläche während dem Aufnehmen der Streckenreflexionsmessung aufweisen. Die Lichtquelle kann hierbei eine konstante oder eine variabel anpassbare Lichtquellenintensität aufweisen. Die Lichtquellenintensität kann hierbei insbesondere indikativ für eine Intensität des von der Lichtquelle abgestrahlten bzw. ausgegebenen Lichts zur Bestrahlung der Oberfläche sein. Insbesondere kann der zumindest eine Messparameter die Lichtquellenintensität umfassen. Bei einer anpassbaren Lichtquellenintensität kann die Lichtquellenintensität durch eine entsprechende Ansteuerung der Lichtquelle angepasst werden. Alternativ oder zusätzlich kann eine entsprechend ausgewählte Blende und/oder eine entsprechend eingestellte anpassbare Blende zwischen der Lichtquelle und der Oberfläche vorgesehen werden, um die Lichtquellenintensität anzupassen. Alternativ oder zusätzlich kann ein entsprechend ausgewählter Abschwächer (z.B. ein Graufilter) und/oder ein entsprechend eingestellter anpassbarer Abschwächer zwischen der Lichtquelle und der Oberfläche vorgesehen werden, um die Lichtquellenintensität anzupassen.

Ferner kann die Reflexionserfassungseinheit einen Detektor zur Detektion von reflektiertem Licht von der Oberfläche während dem Aufnehmen der Streckenreflexionsmessung aufweisen. Die Reflexionserfassungseinheit kann hierbei ferner zumindest einen Detektionsabschwächer zwischen der Oberfläche und dem Detektor aufweisen, der ausgelegt ist, eine Lichtintensitätsreduktion des auf den Detektor einfallenden, reflektierten Lichts durchzuführen. Beispielsweise kann der Detektionsabschwächer ein Filter, z.B. ein Graufilter sein. Insbesondere kann der zumindest eine Messparameter die Lichtintensitätsreduktion umfassen.

Der zumindest eine Messparameter kann ferner einen Reflexionsgrad der Oberfläche bzw. des zu messenden Gegenstands umfassen. Der Reflexionsgrad kann hierbei insbesondere, z.B. mittels entsprechend geeigneter Messvorrichtungen, vor der Reflexionsmessung bzw. vor dem Aufnehmen der zumindest einen Streckenreflexionsmessung bestimmt bzw. ermittelt bzw. gemessen werden.

Der zumindest eine Messparameter kann ferner eine Form der Messstrecke umfassen. Der zumindest eine Messparameter kann ferner eine Länge der Messstrecke umfassen. Die Länge der Messstrecke kann hierbei insbesondere als eine Länge entlang der Messstrecke verstanden werden. Der zumindest eine Messparameter kann ferner einen Startpunkt und/oder einen Endpunkt der Messstrecke umfassen. Der Startpunkt und/oder der Endpunkt kann hierbei in Koordinatenform bezüglich eines Koordinatensystems, z.B. eines Koordinatensystems des zu messenden Gegenstands oder der Reflexionserfassungseinheit vorgegeben werden. Der zumindest eine Messparameter kann ferner eine Messdauer (z.B. Akkumulationsdauer) der Streckenreflexionsmessung für die Messstrecke umfassen. Die Messdauer kann hierbei insbesondere eine Zeiteinheit indikativ für eine Gesamtzeit sein, in welcher die Reflexionserfassungseinheit bzw. der Detektor die Streckenreflexionsmessung durchführt.

Die Messdauer kann hierbei von einem Reflexionsverhalten des zu vermessenden Gegenstands bzw. der Oberfläche abhängen. Das Verfahren kann hierbei insbesondere einen Schritt des Bestimmens der Messdauer umfassen.

Vorzugsweise kann das Bestimmen der Messdauer mittels eines 50 % Spiegels, d. h. mittels eines Reflexionsstandards (z. B. Silberspiegels) durchgeführt werden, wobei dieser sich dadurch auszeichnet, dass nahezu wellenlängen-unabhängig ein (mittlerer) Reflexionsgrad von ca. 50 % vorliegt. Hintergrund hierzu ist, dass eine Entspiegelungsbeschichtung zwar ein sehr niedriges Reflexionsvermögen im sichtbaren Spektralbereich aufweisen kann, im ultravioletten Spektralbereich jedoch häufig Verspiegelungseigenschaften mit einem Reflexionsvermögen aufweisen kann, dessen Reflexionsmaximum bis zu 50 % betragen kann. Ein Vorteil der Verwendung eines solchen hochreflektierenden Reflexionsstandards ist, dass keine, insbesondere aufwändige, Bestimmung der Messdauer zu erfolgen hat, bei der wahlweise Kenntnis des mittleren Reflexionsvermögens der Oberfläche oder eine erste, kurze Charakterisierungsmessung zur Bestimmung eines solchen, mittleren Reflexionsvermögens zu erfolgen hat.

Alternativ kann das Bestimmen der Messdauer ein Durchführen einer Einzelreflexionsmessung an der Oberfläche und/oder dem Reflexionsstandard umfassen. Basierend auf der Einzelreflexionsmessung kann bestimmt werden, "wie viel Licht" der Detektor vertragen kann bzw. wie stark die Intensität der Lichtquelle abgeschwächt werden muss, um z.B. sicherzustellen, dass der Sättigungsschwellenwert nicht überschritten wird.

Wie oben beschrieben kann insbesondere durch eine geeignete Wahl der jeweiligen Messparameter, insbesondere der Messdauer, vorteilhaft eine Überschreitung des Sättigungsschwellenwerts vermieden werden. Beispielsweise kann der Reflexionsgrad der Oberfläche bestimmt werden und basierend hierauf eine Messdauer gewählt werden, um die Überschreitung des Sättigungsschwellenwerts zu vermeiden.

Das Verfahren zur Reflexionsmessung kann ferner ein (z.B. automatisches) Bestimmen der tatsächlichen Lage und/oder Orientierung des zu messenden Gegenstands anhand von zumindest einem charakteristischen Merkmal des zu messenden Gegenstands umfassen. Das Verfahren zur Reflexionsmessung kann ferner Detektieren zumindest eines charakteristischen Merkmals des zu messenden Gegenstands umfassen.

Das zumindest eine charakteristische Merkmal des zu messenden Gegenstands (das heißt das zumindest eine Merkmal, das den zu messenden Gegenstand charakterisiert); kann innen (das heißt im Inneren des zu messenden Gegenstands) und/oder außen (zum Beispiel auf einer Oberfläche und/oder einer Randfläche des zu messenden Gegenstands) angebracht sein. Beispielhafte charakteristische Merkmale, die innen angebracht sind, sind Permanentgravuren einer zu messenden optischen Linse, wie zum Beispiel eines zu messenden Brillenglases. Beispielhafte charakteristische Merkmale, die außen angebracht sind, sind Einkerbungen, Erhebungen, gedruckte Markierungen, Barcodes und/oder andere Markierungen. Die Einkerbungen, Erhebungen, Markierungen, etc. können beispielsweise am Rand bzw. an einer Randfläche einer optischen Linse, wie zum Beispiel eines Brillenglases, oder auf einer anderen Oberfläche angebracht sein. Charakteristische Merkmale können ferner Merkmale sein, die dem gemessenen Gegenstand inhärent sind, wie zum Beispiel bestimmte Strukturen, Texturen, Formen, etc.

Die Lage und/oder Orientierung des zu messenden Gegenstands kann durch Aufnehmen und/oder Erkennen und/oder Auswerten zumindest eines Bildes erfolgen, welches innere und/oder äußere charakteristische Merkmale des zu messenden Gegenstands enthält oder darstellt. Alternativ oder zusätzlich kann im Falle eines äußeren charakteristischen Merkmals, die Lage und/oder Orientierung des zu messenden Gegenstands auch durch taktile Verfahren mittels zumindest eines Sensors (zum Beispiel durch "Ertasten" des jeweiligen Merkmals) bestimmt werden.

Nach erfolgter Bestimmung der tatsächlichen Lage und/oder Orientierung des zu messenden Gegenstands, wie z.B. oben diskutiert, kann der zu messende Gegenstand in eine vorgegebene (zum Beispiel vorbestimmte) Lage und/oder Orientierung gebracht werden. Das Verfahren zur Reflexionsmessung kann dementsprechend ferner umfassen:
(z.B. automatisches) Bringen des zu messenden Gegenstands in eine vorgegebene Lage und/oder Orientierung anhand der tatsächlichen Lage und/oder Orientierung des zu messenden Gegenstands; und/oder
(z.B. automatisches) Umrechnen einer Anordnung der zumindest einen Messstrecke auf die tatsächliche Lage und/oder Orientierung des zu messenden Gegenstands.

Der zu messende Gegenstand kann zum Beispiel durch eine Translation und/oder eine Rotation des Gegenstands (zum Beispiel um eine Achse durch dessen Mittelpunkt) in eine vorgegebene Lage und/oder Orientierung gebracht werden. So kann beispielsweise ein Brillenglas so lange gedreht werden bis zumindest ein charakteristisches Merkmal (wie zum Beispiel die Permanentgravuren eines Brillenglases und/oder oder eine Einkerbung am Rand eines Brillenglases) an einer vorgegebenen Stelle und/oder in einer vorgegebenen Richtung bzw. Achslage orientiert bzw. ausgerichtet ist. Auf diese Weise kann sichergestellt werden, dass die Anordnung der Messstrecke unabhängig von der ursprünglichen Einlegeorientierung des zu messenden Gegenstands stets identisch vorliegt und/oder beispielsweise die Messstrecke stets in einer festen Relation zu einem charakteristischen Merkmal des zu messenden Gegenstands vorliegt.

Anhand der erfassten Lage und/oder Orientierung des zu messenden Gegenstands kann auch eine computer-implementierte Umrechnung erfolgen, derart, dass die Anordnung der Messstrecke automatisch bzw. computerseitig auf die tatsächliche Lage bzw. Orientierung des zu messenden Gegenstands umgerechnet wird, auch hier unter der Maßgabe, dass die Anordnung der Messstrecke unabhängig von der Einlegeorientierung des zu messenden Gegenstands stets identisch vorliegt und/oder beispielsweise die Messstrecke stets in einer festen Relation zu einem charakteristischen Merkmal des zu messenden Gegenstands vorliegt.

Die Messstrecke, die Streckenreflexionsmessung, das kumulierte Reflexions-Messsignal und/oder die resultierende Reflexionsmessung können in einer oder mehrerer geeigneter Speichervorrichtungen abgespeichert werden.

Nach erfolgter Reflexionsmessung kann der Gegenstand einer Nachbehandlung unterzogen werden. Die Nachbehandlung kann zum Beispiel ein Entfernen einer zuvor eingebrachten Reflexionsminderungsschicht und/oder Entfernen eines Klebebands und/oder Durchführen einer Reinigung, etc. umfassen. Die Nachbehandlung kann automatisiert erfolgen.

Gemäß einem zweiten Aspekt wird eine Vorrichtung zur Reflexionsmessung an einer Oberfläche eines zu messenden Gegenstands bereitgestellt. Die Vorrichtung zur Reflexionsmessung umfasst:
eine Reflexionserfassungseinheit, welche ausgebildet ist, eine Streckenreflexionsmessung zur Erzeugung eines kumulierten Reflexions-Messsignals, insbesondere basierend auf zumindest einem Messparameter, aufzunehmen, wobei die Streckenreflexionsmessung (zum Beispiel kontinuierlich) entlang einer Messstrecke entlang der Oberfläche aufgenommen wird; und
zumindest eine Aktuatoreinheit, welche ausgebildet ist, eine relative Bewegung zwischen der Reflexionserfassungseinheit und dem zu messenden Gegenstand entlang der Messstrecke während der Streckenreflexionsmessung zu erzeugen,
wobei die Vorrichtung zur Reflexionsmessung und/oder die Reflexionserfassungseinheit ausgelegt ist, das erzeugte kumulierte Reflexions-Messsignal als eine resultierende Reflexionsmessung bereitzustellen.

Erfindungsgemäß ist die Vorrichtung zur Reflexionsmessung ausgelegt, ein Verfahren zur Reflexionsmessung gemäß dem ersten Aspekt auszuführen. Hierbei kann die Vorrichtung insbesondere eine beliebige Kombination der Merkmale, *mutatis mutandis,* wie für das Verfahren zur Reflexionsmessung hierin beschrieben, aufweisen.

Weiterhin gelten auch hinsichtlich dieser Vorrichtung die vorgenannten bevorzugten Ausführungsvarianten und/oder die vorgenannten Vorteile in sinngemäßer Weise. Insbesondere kann die Vorrichtung zur Reflexionsmessung eine Vorrichtung sein, die ausgebildet bzw. konfiguriert ist, das Verfahren zur Reflexionsmessung gemäß einem der oben genannten Aspekte und Beispiele durchzuführen.

Die Reflexionserfassungseinheit kann hierbei insbesondere ausgelegt sein, die Streckenreflexionsmessung aufzunehmen, welche zum Beispiel kontinuierlich entlang der Messstrecke auf der Oberfläche des zu messenden Gegenstands aufgenommen wird.

insbesondere kann die Reflexionserfassungseinheit ausgelegt sein, bei einer solchen (insbesondere kontinuierlichen) Streckenreflexionsmessung Messwerte entlang der gesamten Messstrecke zu erfassen, wodurch das kumulierte Reflexions-Messsignal erzeugt wird. Mit anderen Worten kann die Reflexionserfassungseinheit konfiguriert sein, bei einer solchen Streckenreflexionsmessung, insbesondere kontinuierlich, Messwerte an einer Vielzahl von, vorzugsweise an allen, Messpositionen entlang der gesamten Messstrecke zu erfassen, wodurch das kumulierte Reflexions-Messsignal erzeugt wird. Das kumulierte Reflexions-Messsignal kann somit eine Superposition von Messsignalen bzw. Messwerten an einer Vielzahl von, vorzugsweise an allen, Messpositionen entlang der gesamten Messstrecke sein. Mit anderen Worten kann die Reflexionserfassungseinheit ausgelegt sein, das kumulierte Reflexions-Messsignal als genau eine Reflexionsmessung, insbesondere Streckenreflexionsmessung, über die gesamte Messstrecke zu erzeugen.

Die Reflexionserfassungseinheit kann insbesondere ausgelegt sein, die Streckenreflexionsmessung zur Erzeugung des kumulierten Reflexions-Messsignals basierend auf zumindest einem Messparameter aufzunehmen. Die bezüglich der Messparameter hierin, insbesondere bezüglich des Verfahrens zur Reflexionsmessung gemäß dem ersten Aspekt, beschriebenen Ausführungen und Merkmale gelten hierbei sinngemäß ebenfalls für die Vorrichtung zur Reflexionsmessung bzw. für die Reflexionserfassungseinheit. Ferner kann die Reflexionserfassungseinheit einen Sättigungsschwellenwert aufweisen, wobei die Reflexionserfassungseinheit und/oder die Vorrichtung zur Reflexionsmessung ausgelegt sein kann, den zumindest einen Messparameter derart festzulegen, dass während der Aufnahme der Streckenreflexionsmessung basierend auf dem zumindest einen Messparameter der Sättigungsschwellenwert nicht überschritten wird.

Die Vorrichtung zur Reflexionsmessung kann ferner eine Aufnahme für den zu messenden Gegenstand umfassen bzw. aufweisen. Die Aufnahme für den zu messenden Gegenstand kann eine beliebige Aufnahme sein, die ausgebildet ist, den zu messenden Gegenstand bzw. das zu messende Objekt aufzunehmen. Die Aufnahme kann zum Beispiel aus einer Grund- bzw. Trägerplatte bestehen oder eine Grund- bzw. Trägerplatte umfassen. Alternativ und/oder zusätzlich kann die Aufnahme eine Halterung für den zu messenden Gegenstand enthalten bzw. aufweisen.

Die Vorrichtung zur Reflexionsmessung kann ferner eine Recheneinheit zur Bestimmung zumindest eines Messparameters, z.B. einer Messdauer, für die Streckenreflexionsmessung aufweisen.

Die Reflexionserfassungseinheit kann zumindest eine Lichtquelle zur Bestrahlung, insbesondere während der Streckenreflexionsmessung, des zu messenden Gegenstands mit Licht (Messlicht) und zumindest einen Detektor zur Detektion zumindest eines Teils des von dem Gegenstand während der Bestrahlung, insbesondere während der Streckenreflexionsmessung, reflektierten Lichts umfassen. Die Lichtquelle kann eine geeignete Lichtquelle sein und kann eine oder mehrere LEDs, Lampen (zum Beispiel Weißlichtlampen), Laser (wie zum Beispiel durchstimmbare Laser oder Laser mit Frequenzverdopplung), etc. umfassen.

Die Vorrichtung zur Reflexionsmessung umfasst ferner die zumindest eine Aktuatoreinheit bzw. weist ferner die zumindest eine Aktuatoreinheit auf. Die zumindest eine Aktuatoreinheit ist hierbei ausgebildet, eine relative Bewegung zwischen der Reflexionserfassungseinheit und dem zu messenden Gegenstand entlang der Messstrecke während der Streckenreflexionsmessung zu erzeugen. Die Aktuatoreinheit kann beispielsweise eine erste Aktuatoreinheit zur Bewegung der Reflexionserfassungseinheit und/oder eine zweite Aktuatoreinheit zur Bewegung des zu messenden Gegenstands aufweisen. Hierbei kann die Aktuatoreinheit zur Erzeugung einer relativen Translationsbewegung, einer relativen Verkipp- bzw. Rotationsbewegung, und/oder einer beliebigen Kombination hiervon ausgelegt sein.

Die relative Bewegung des zu messenden Gegenstands kann daher eine Bewegung des zu messenden Gegenstands bei gleichzeitig ruhender Reflexionserfassungseinheit, eine Bewegung der Reflexionserfassungseinheit bei gleichzeitig ruhendem, zu messendem Gegenstand oder eine gleichzeitige Bewegung sowohl des zu messenden Gegenstands als auch der Reflexionserfassungseinheit umfassen.

Beispielsweise kann der Gegenstand während der Aufnahme der Streckenreflexionsmessung ruhen und die Reflexionserfassungseinheit relativ zu dem ruhenden, zu messenden Gegenstand bewegt werden. Die relative Bewegung der Reflexionserfassungseinheit zu dem ruhenden, zu messenden Gegenstand kann insbesondere eine Veränderung der horizontalen und/oder der vertikalen Position der Reflexionserfassungseinheit in Bezug auf den Mittelpunkt des Gegenstands umfassen. Die Reflexionserfassungseinheit wird bevorzugt entlang der Messstrecke bzw. parallel zu der Messstrecke zur Aufnahme der Streckenreflexionsmessung bewegt, wobei die Bewegung beispielsweise automatisch erfolgen kann. Vorzugsweise wird hierbei die Reflexionserfassungseinheit vor Aufnahme der Streckenreflexionsmessung möglichst nahe oder in direkten Kontakt mit der Oberfläche des Gegenstands gebracht. Dies ist besonders bei Reflexionsmessungen mit fokussiertem Licht von Vorteil. Bei solchen Messungen muss in der Regel ein vom Messsystem vorgegebener Abstand eng eingehalten werden. Insbesondere kann der zumindest eine Messparameter den vorgegebenen Abstand umfassen. Bei Messvorrichtungen mit parallelem Licht hingegen ist das Einhalten eines vorgegebenen (zum Beispiel geringen) Abstands der Reflexionserfassungseinheit von der zu messenden Oberfläche von sekundärer Bedeutung.

Nach einer Aufnahme der Streckenreflexionsmessung kann der Abstand zwischen der Reflexionserfassungseinheit und der Oberfläche des Gegenstands vergrößert werden, zumindest so weit, dass kein versehentliches Beschädigen (wie zum Beispiel Verkratzen) der Oberfläche stattfindet.

Alternativ kann die Reflexionserfassungseinheit statisch, insbesondere ruhend, ausgeführt sein und die relative Bewegung kann durch Bewegen des zu messenden Gegenstands erfolgen. Auch hier kann vorteilhafterweise eine Vergrößerung des Abstandes zwischen der Oberfläche des zu messenden Gegenstands und der Reflexionserfassungseinheit stattfinden, um auch in dieser Ausführungsform ein Beschädigen der Oberfläche zu verhindern.

Eine Kombination einer Bewegung des zu messenden Gegenstands und der Reflexionserfassungseinheit ist ebenfalls möglich.

Die Vorrichtung zur Reflexionsmessung und/oder die Recheneinheit kann ferner vorzugsweise eine Messstrecken-Einheit aufweisen. Die Messstrecken-Einheit kann hierbei insbesondere ausgelegt sein, die Messstrecke entlang der Oberfläche festzulegen. Alternativ oder zusätzlich kann die Messstrecken-Einheit ausgelegt sein, die Messstrecke entlang der Oberfläche während der Aufnahme der entsprechenden Streckenreflexionsmessung dynamisch festzulegen. Die Messstrecken-Einheit kann hierbei insbesondere wie entsprechend für das Verfahren zur Reflexionsmessung hierin beschrieben ausgelegt sein. Die Messstrecken-Einheit kann hierbei insbesondere als eine eigenständige Einheit der Vorrichtung ausgebildet sein und mit anderen Teilen (z.B. Aktuatoreinheiten und/oder Steuerungseinheiten) der Vorrichtung zum Austausch von Daten, Strom, und/oder Steuerbefehlen verbunden sein. Alternativ kann die Messstrecken-Einheit von einem anderen Teil, z.B. einer Aktuatoreinheit oder einer Steuerungseinheit bzw. Recheneinheit, umfasst sein.

Die Recheneinheit kann zumindest einen Computerprozessor und/oder zumindest eine spezialisierte programmierbare Logik und/oder zumindest einen Computer und/oder eine Rechnerwolke, etc. umfassen. Das Aufnehmen der Streckenreflexionsmessung und das Bereitstellen der resultierenden Reflexionsmessung können wie oben in Zusammenhang mit dem Verfahren zur Reflexionsmessung gemäß dem ersten Aspekt und den Beispielen beschrieben erfolgen. Die Recheneinheit kann Bestandteil einer Steuerungseinheit der Vorrichtung zur Reflexionsmessung sein oder mittels einer geeigneten Datenverbindung mit einer Steuerungseinheit verbunden sein.

Um die relative Bewegung zwischen dem zu messenden Gegenstand und der Reflexionserfassungseinheit zu realisieren kann die Vorrichtung zur Reflexionsmessung eine geeignete Aktuatoreinheit und eine entsprechende Steuerungseinheit umfassen. Insbesondere kann die Vorrichtung zur Reflexionsmessung umfassen:
die zumindest eine Aktuatoreinheit, welche beispielsweise ausgebildet ist, den zu messenden Gegenstand bzw. die Aufnahme und/oder die Reflexionserfassungseinheit zu bewegen; und/oder
eine Steuerungseinheit, welche ausgebildet ist, Steuerbefehle an die zumindest eine Aktuatoreinheit zu senden, um eine relative Bewegung zwischen dem zu messenden Gegenstand und der Reflexionserfassungseinheit zu realisieren.

Die zumindest eine Aktuatoreinheit kann einen oder mehrere Aktuatoren umfassen. Unter einem Aktuator wird im Rahmen der vorliegenden Anmeldung eine Antriebseinheit verstanden, welche Steuerbefehle (zum Beispiel in Form von elektrischen Signalen) von einer Steuerungseinheit in mechanische Bewegung und optional andere physikalische Größen (wie zum Beispiel Druck und/oder Temperatur) transformieren bzw. umsetzen. Wie oben beschrieben kann die zumindest eine Aktuatoreinheit ausgebildet sein, eine relative Bewegung zwischen dem zu messenden Gegenstand und der Reflexionserfassungseinheit zu realisieren. Hierfür kann die zumindest eine Aktuatoreinheit ausgebildet sein, nur die Aufnahme für den Gegenstand, nur die Reflexionserfassungseinheit oder sowohl die Aufnahme als auch die Reflexionserfassungseinheit zu bewegen, wobei die Bewegung eine Translation in zumindest einer Richtung und/oder eine Rotation um zumindest eine Rotationsachse umfassen kann. Beispielhafte Aktuatoren umfassen Motoren, wie zum Beispiel Schrittmotoren.

Die Steuerungseinheit kann zum Steuern und/oder Regeln der zumindest einen Aktuatoreinheit und gegebenenfalls anderer Einheiten der Vorrichtung zur Reflexionsmessung (wie zum Beispiel Reflexionserfassungseinheit, Recheneinheit, etc.) ausgebildet sein. Ferner kann die Steuerungseinheit die oben beschriebene Recheneinheit zum Bestimmen von weiteren relevanten Daten, z.B. eines oder mehrerer Messparameter, umfassen. Die Steuerungseinheit kann ferner weitere Einheiten umfassen, wie zum Beispiel eine Speichereinheit, eine Eingabeeinheit zur Eingabe von Daten, eine Ausgabeeinheit zur Ausgabe von Daten (wie zum Beispiel Informationen und/oder Befehle), eine Kommunikationseinheit zur Kommunikation von Daten sowohl von als auch zu der Steuerungseinheit und/oder zu den einzelnen Einheiten der Steuerungseinheit, und/oder zu anderen Einheiten umfassen. Die Kommunikation zwischen den einzelnen Einheiten der Steuerungseinheit und/oder externer Einheiten kann über geeigneten Schnittstellen erfolgen.

Die Vorrichtung zur Reflexionsmessung kann ferner zumindest eine Speichereinheit zum temporären oder dauerhaften Speichern von Daten enthalten. Beispielsweise kann die zumindest eine Speichereinheit die aufgenommene Streckenreflexionsmessung, die Messstrecke, das kumulierte Reflexions-Messsignal und/oder die resultierende Reflexionsmessung speichern. Die Daten können in einer geeigneten Form, wie zum Beispiel in einer oder mehreren Dateien, in einer Datenbank, in einer Datenwolke, etc. gespeichert werden. Die Speichereinheit kann zum Beispiel zumindest eine Festplatte, einen Cloudspeicher oder andere geeignete Speicher umfassen. Die Speichereinheit kann Bestandteil der Steuerungseinheit sein oder mittels einer geeigneten Datenverbindung mit der Steuerungseinheit verbunden sein.

Die Vorrichtung zur Reflexionsmessung kann ferner zumindest eine Eingabeeinheit zur Eingabe von Daten (wie zum Beispiel Informationen und/oder Befehlen) umfassen. Die Eingabeeinheit kann zum Beispiel eine Computermaus und/oder eine Computertastatur und/oder einen berührungsempfindlichen Bildschirm und/oder eine andere geeignete Eingabeeinheit umfassen. Die Eingabeeinheit kann Bestandteil der Steuerungseinheit sein oder mittels einer geeigneten Datenverbindung mit der Steuerungseinheit verbunden sein.

Ferner kann die Vorrichtung zur Reflexionsmessung eine Ausgabeeinheit zur Ausgabe von Daten (wie zum Beispiel Informationen und/oder Befehlen) umfassen. Die Ausgabeeinheit kann zum Beispiel zumindest einen Computerbildschirm zur Ausgabe bzw. zur Darstellung von Text und/oder Bildern und/oder Grafiken, und/oder zumindest ein Lautsprecher zur Ausgabe von Audiodaten umfassen. Die Ausgabeeinheit kann Bestandteil der Steuerungseinheit sein oder mittels geeigneter Datenverbindung mit der Steuerungseinheit verbunden sein.

Die Vorrichtung zur Reflexionsmessung kann ferner eine Kommunikationseinheit zur kabelgebundenen und/oder oder drahtlosen Übertragung von Daten (wie zum Beispiel Informationen und/oder Befehlen), zum Beispiel von der Steuerungseinheit zu anderen Einheiten (wie zum Beispiel Reflexionserfassungseinheit, Speichereinheit, Aktuatoreinheit, etc.) und/oder in umgekehrter Richtung, aufweisen. Die Kommunikationseinheit kann Bestandteil der Steuerungseinheit sein oder mittels einer geeigneten Datenverbindung mit der Steuerungseinheit verbunden sein.

Die Vorrichtung kann ferner eine Positionserfassungseinheit umfassen, welche konfiguriert ist, die tatsächliche Lage und/oder Orientierung des zu messenden Gegenstands in der Vorrichtung zur Reflexionsmessung zu bestimmen. Wie in Zusammenhang mit dem Verfahren zur Reflexionsmessung beschrieben kann die tatsächliche Lage und/oder Orientierung des zu messenden Gegenstands in der Vorrichtung zur Reflexionsmessung anhand zumindest eines charakteristischen Merkmals des Gegenstands bestimmt werden. Die Positionserfassungseinheit kann Bestandteil der Steuerungseinheit sein oder mittels einer geeigneten Datenverbindung mit der Steuerungseinheit verbunden sein.

Die Positionserfassungseinheit kann dementsprechend zumindest einen Detektor zum Detektieren bzw. Erfassen von zumindest einem charakteristischen Merkmal des zu messenden Gegenstands umfassen. Wie oben beschrieben kann die Lage und/oder Orientierung des zu messenden Gegenstands zum Beispiel auf Basis zumindest eines aufgenommenen Bilds des zu messenden Gegenstands bestimmt werden. Die Positionserfassungseinheit kann dementsprechend zumindest eine Kamera aufweisen, um den zu messenden Gegenstand fotografisch hinsichtlich dessen charakteristischen Merkmale zu erfassen und/oder auszuwerten, um dessen Lage und/oder Orientierung zu bestimmen. Optional kann die Kamera eine Lichtquelle umfassen, bevorzugt eine Lichtquelle, die ein möglichst neutrales Licht (Weißlicht) emittiert, besonders bevorzugt eine Normlichtquelle, die ein Tageslicht-ähnliches Lichtspektrum emittiert. Ferner kann die Positionserfassungseinheit eine Auswerteeinheit aufweisen, die konfiguriert ist, das zumindest eine von der Kamera aufgenommene Bild auszuwerten und daraus anhand zumindest eines charakteristischen Merkmals des zu messenden Gegenstands die Lage und/oder Orientierung des zu messenden Gegenstands zu ermitteln. Wie oben beschrieben kann das zumindest eine charakteristische Merkmal ein inneres oder ein äußeres Merkmal des zu messenden Gegenstands sein. Die Auswerteeinheit kann Bestandteil der oben beschriebenen Recheneinheit oder als eigenständiges Modul realisiert werden.

Anstelle oder zusätzlich zur Kamera kann die Positionserfassungseinheit einen weiteren Sensor zum Erfassen zumindest eines den zu messenden Gegenstand charakterisierenden Merkmals umfassen, anhand dessen die Lage und/oder Orientierung des zu messenden Gegenstands bestimmt werden kann bzw. können. Der Sensor kann zum Beispiel ein Fühler sein, der eine Einkerbung am Rand des zu messenden Gegenstands erkennen bzw. detektieren bzw. "erstasten" kann.

Anhand der von der Positionserfassungseinheit bestimmten Lage und/oder Orientierung des Gegenstands kann, wie oben beschrieben, wahlweise die tatsächliche Lage und/oder Orientierung des Gegenstands mittels Ausrichtung (umfassend zum Beispiel Translation und/oder Rotation) korrigiert werden, oder es kann die auf diese Weise bestimmte tatsächliche Lage bzw. Orientierung softwareseitig als Korrekturwert berücksichtigt werden.

Die Vorrichtung zur Reflexionsmessung kann ferner zumindest eine Bedienerschnittstelle umfassen, welche ausgebildet bzw. konfiguriert ist, Daten (wie zum Beispiel Informationen und/oder Befehle) anzuzeigen und/oder die Eingabe von Daten (wie zum Beispiel Informationen und/oder Befehlen) zu ermöglichen. Die Bedienerschnittstelle kann in geeigneter Software implementiert sein. Die Bedienerschnittstelle kann Bestandteil der Eingabeeinheit und/oder der Ausgabeeinheit sein. Die Bedienerschnittstelle kann beispielsweise als eine graphische Benutzerschnittstelle implementiert sein oder eine graphische Benutzerschnittstelle umfassen.

Die Informationen können zum Beispiel Informationen bezüglich der aufgenommenen Streckenreflexionsmessung, der Messstrecke, des kumulierten Reflexions-Messsignals und/oder bezüglich der resultierenden Reflexionsmessung und/oder Informationen betreffend den Zustand der Vorrichtung zur Reflexionsmessung und/oder Fehlerwarnungen und/oder andere relevante Informationen sein. Die aufgenommene Streckenreflexionsmessung bzw. das kumulierte Reflexions-Messsignal können beispielsweise in einer Reflexions-Wellenlängen-Darstellung angezeigt werden. Alternativ oder zusätzlich kann die Messstrecke der Streckenreflexionsmessung in einer Draufsichtdarstellung des zu messenden Gegenstands angezeigt werden. Bei Verfügbarkeit einer Kamera kann optional die Draufsichtdarstellung auch ein aufgenommenes, reales Bild des zu messenden Gegenstands sein, in welchem die Messstrecke der Streckenreflexionsmessung als Überlagerung eingezeichnet wird.

Optional kann die Bedienerschnittstelle konfiguriert sein, eine oder mehrere der nachfolgenden Funktionen bereitzustellen bzw. zu ermöglichen:
- Anzeigen, Bearbeiten (wie zum Beispiel Ausschließen (zum Beispiel durch Abschneiden, Entfernen, Deaktivieren, etc.) und/oder Hinzufügen (zum Beispiel durch Aufnehmen, Aktivieren, etc.) von spektralen Teilbereichen der Streckenreflexionsmessung und/oder der resultierenden Reflexionsmessung; und/oder
- Berechnen und/oder Anzeigen von Farbwerten nach Norm für die Streckenreflexionsmessung und/oder für die resultierende Reflexionsmessung. Die für die Streckenreflexionsmessung berechneten Farbwerte können optional in RGB-Farbwerte umgerechnet werden. Ferner kann in einer Draufsichtdarstellung des zu messenden Gegenstands die Messstrecke der Streckenreflexionsmessung entsprechend der entlang dieser Messstrecke ermittelten Farbwerte (wie zum Beispiel RGB-Farbwert) eingefärbt bzw. gekennzeichnet werden.

Die Vorrichtung zur Reflexionsmessung kann eine Halterung zum Halten mindestens eines Referenzgegenstands umfassen, wie zum Beispiel zum Halten einer Probe oder einer optischen Linse eines Reflexionsstandards. Auf diese Weise können die durchgeführten Messungen mit einem Reflexionsstandard normiert werden, um die Intensität des eingestrahlten Lichts zu bestimmen und gegebenenfalls zu normieren. Beispielhafte Normierungen wurden oben in Zusammenhang mit dem Verfahren zur Reflexionsmessung beschrieben.

Die Vorrichtung zur Reflexionsmessung kann ferner eine Vorbehandlungseinrichtung (Vorbehandlungsstation) aufweisen, in welcher eine Vorbehandlung des zu messenden Gegenstands vor Durchführung der Streckenreflexionsmessungen stattfindet bzw. stattfinden kann. Die Vorbehandlung kann zum Beispiel eine Reinigung des zu messenden Gegenstands und/oder eine Behandlung der nicht zu messenden Rückfläche sein. Die Behandlung der Rückfläche kann zum Beispiel ein Mattieren bzw. Aufrauen zumindest eines Teilbereichs der nicht zu messenden Rückfläche und/oder ein Aufbringen einer reflexmindernden Schicht, die unerwünschten Rückreflexionen hindert und/oder ein Schwärzen zumindest eines Teilbereichs der nicht zu messenden Rückfläche, wobei das Schwärzen beispielsweise nach dem Mattieren bzw. Aufrauen erfolgt.

Die Vorrichtung zur Reflexionsmessung kann ferner eine Nachbehandlungsvorrichtung (Nachbehandlungsstation) aufweisen, die ausgebildet ist, den Gegenstand nach erfolgter Reflexionsmessung einer Nachbehandlung zu unterziehen. Die Nachbehandlung kann zum Beispiel ein Entfernen einer zuvor eingebrachten Reflexionsminderungsschicht und/oder Entfernen eines Klebebands und/oder Durchführen einer Reinigung, etc. umfassen. Die Nachbehandlung kann beispielsweise automatisiert erfolgen.

Die Vorrichtung zur Reflexionsmessung ist insbesondere geeignet, in eine Fertigungsstraße integriert zu werden.

Ferner kann die Vorrichtung zur Reflexionsmessung zumindest teilweise automatisiert werden. Insbesondere kann der zu messende und gegebenenfalls vorbehandelte Gegenstand automatisch zur Vorrichtung zur Reflexionsmessung befördert werden (zum Beispiel mittels einer geeigneten Transportvorrichtung, wie zum Beispiel einer Rollenbahn). Ferner kann die Vorrichtung zur Reflexionsmessung automatisch mit einem zu messenden Gegenstand beladen werden. Dies kann mittels eines geeigneten Manipulators erfolgen. Ebenfalls kann die Durchführung der Reflexionsmessung(en) automatisiert stattfinden und/oder nach erfolgter Reflexionsmessung kann der zu messende Gegenstand wieder automatisiert aus der Vorrichtung entladen werden. Die Vorrichtung zur Reflexionsmessung kann dementsprechend eine Beladungseinheit aufweisen, welche ausgebildet ist, den zu messenden Gegenstand in der Aufnahme zu positionieren, und/oder eine Entladungseinheit, welche ausgebildet ist, den zu messenden Gegenstand aus der Aufnahme zu entnehmen. Die Beladungseinheit und/oder die Entladungseinheit können auch als separate Einheiten (zum Beispiel in einer Fertigungsstraße) implementiert werden. Die Beladungseinheit und/oder Entladungseinheit kann mittels einer geeigneten Datenverbindung mit der Steuerungseinheit verbunden sein und von der Steuerungseinheit entsprechend gesteuert und/oder geregelt werden.

Nachfolgend werden Ausführungsformen des Verfahrens zur Reflexionsmessung und der Vorrichtung zur Reflexionsmessung anhand begleitender Figuren beispielhaft beschrieben. Einzelelemente der beschriebenen Ausführungsformen sind nicht auf die jeweilige Ausführungsform beschränkt. Vielmehr können Elemente der Ausführungsformen beliebig miteinander kombiniert werden und neue Ausführungsformen dadurch erstellt werden. Es zeigen:
- Figur 1:: eine Reflexions-Wellenlängen-Darstellung einer beispielhaften Vergleichs-Reflexionsmessung eines Brillenglases, aufgenommen mit einem Verfahren nach dem Stand der Technik;
- Figur 2:: eine schematische Darstellung eines Brillenglases mit einer Messstrecke zur Aufnahme von Streckenreflexionsmessungen;
- Figur 3a:: eine schematische Darstellung eines Brillenglases mit einer ersten beispielhaften Anordnung einer Messstrecke zur Aufnahme einer Streckenreflexionsmessung;
- Figur 3b:: eine schematische Darstellung eines Brillenglases mit einer zweiten beispielhaften Anordnung einer Messstrecke zur Aufnahme einer Streckenreflexionsmessung;
- Figur 3c:: eine schematische Darstellung eines Brillenglases mit einer dritten beispielhaften Anordnung einer Messstrecke zur Aufnahme einer Streckenreflexionsmessung;
- Figur 4:: eine schematische Schnittzeichnung einer ersten beispielhaften Vorrichtung zur Reflexionsmessung;
- Figur 5:: eine schematische Schnittzeichnung einer zweiten beispielhaften Vorrichtung zur Reflexionsmessung;
- Figur 6:: eine schematische Schnittzeichnung einer dritten beispielhaften Vorrichtung zur Reflexionsmessung; und
- Figur 7:: eine Reflexions-Wellenlängen-Darstellung der beispielhaften Vergleichs-Reflexionsmessung aus Figur 1 und einer resultierenden Reflexionsmessung.

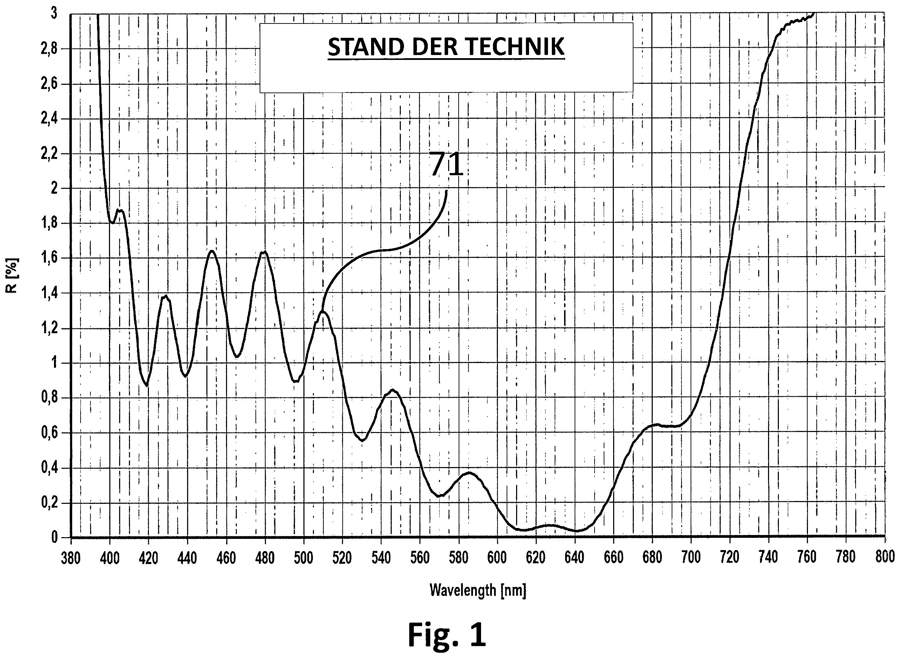

Figur 1 zeigt eine Reflexions-Wellenlängen-Darstellung einer beispielhaften Vergleichs-Reflexionsmessung 71 eines Brillenglases, aufgenommen mit einem Verfahren nach dem Stand der Technik. Auf der Abszisse ist die Wellenlänge in [nm] und auf der Ordinate der mit einem Verfahren nach dem Stand der Technik gemessenen Reflexionswert R in [%] aufgetragen. Die Prozentangabe bezieht sich auf den (prozentualen) Anteil des reflektierten Lichts in Bezug auf das eingestrahlte Licht.

Die Reflexionsmessung weist hohe Interferenzen bzw. eine hohe Interferenzmodulation auf. Insbesondere die Lage des lokalen Minimums im Wellenlängenintervall zwischen 400 nm und 440 nm sowie die Lage des lokalen Maximums im Wellenlängenintervall zwischen 440 nm und 500 nm lässt sich aufgrund der hohen Interferenzmodulation weder bezogen auf den Wellenlängenwert, noch bezogen auf den Reflexionswert ermitteln.

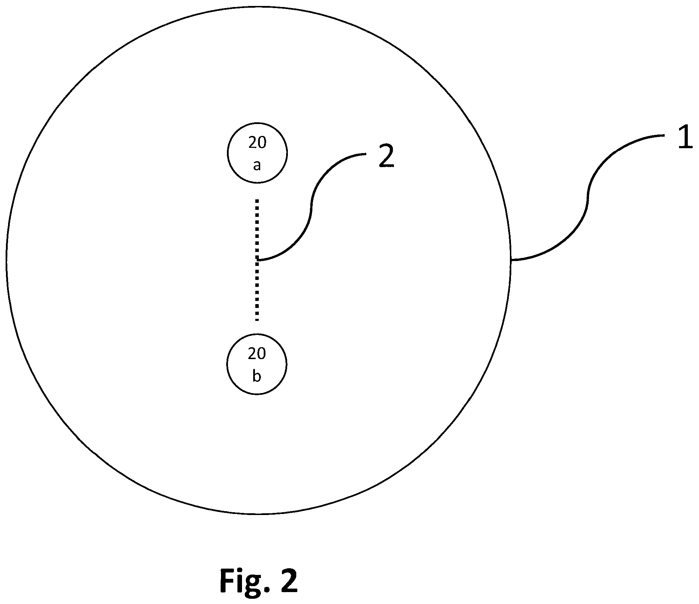

Figur 2 zeigt eine schematische Darstellung eines zu messenden Gegenstands 1 (z.B. ein Brillenglas) mit einer exemplarischen Messstrecke 2, wobei sich die exemplarische Messstrecke 2 linear zwischen zwei Endpunkten 20a, 20b erstreckt, auf der zu messenden Oberfläche des zu messenden Gegenstands 1 zur Aufnahme einer Streckenreflexionsmessung. Die exemplarische Messstrecke 2 liegt entlang einer Gerade, die beispielsweise durch den Mittelpunkt des zu messenden Gegenstands 1 verläuft. Anhand der aufgenommenen Streckenreflexionsmessung entlang der exemplarischen Messstrecke 2 wird, wie oben beschrieben, eine resultierende Reflexionsmessung bereitgestellt.

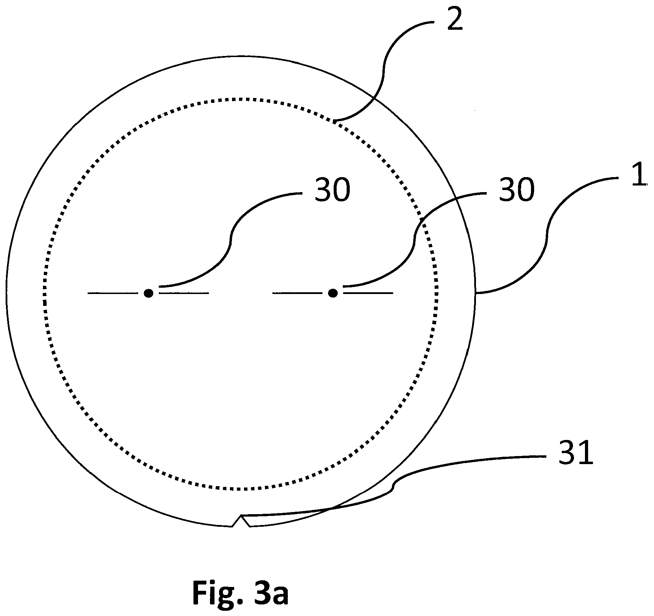

Figuren 3a bis 3c zeigen schematische Darstellungen eines zu messenden Gegenstands 1 (z.B. eines Brillenglases) mit unterschiedlichen beispielhaften Anordnungen von Messstrecken 2 auf der zu messenden Oberfläche des zu messenden Gegenstands 1 zur Aufnahme von Streckenreflexionsmessungen. Anhand der jeweils aufgenommenen Streckenreflexionsmessung entlang jeweils der in den Figuren 3a bis 3c gezeigten Messstrecke 2, wird, wie oben beschrieben, eine resultierende Reflexionsmessung bereitgestellt.

Figur 3a zeigt eine schematische Darstellung eines zu messenden Gegenstands 1 mit einer Anordnung einer im Wesentlichen kreisrunden, auf einen Mittelpunkt des zu messenden Gegenstands 1 zentrierten Messstrecke 2 zur Aufnahme einer Streckenreflexionsmessung.

Der zu messende Gegenstand 1 weist ferner zwei Gravuren 30 als exemplarische, innere, charakteristische Merkmale auf. Wie oben beschrieben kann anhand der Gravuren 30 und gegebenenfalls weiteren Merkmalen und/oder Informationen die tatsächliche Lage und/oder Position des zu messenden Gegenstands 1 in der Vorrichtung zur Reflexionsmessung bestimmt werden.

In Figur 3a ist die Messstrecke 2 in der Nähe des Randes des zu messenden Gegenstands 1 angeordnet.

Der zu messende Gegenstand 1 weist hierbei zusätzlich eine Einkerbung 31 (vorzugsweise in einem Rand bzw. Randbereich des zu messenden Gegenstands 1) als ein exemplarisches, äußeres, charakterisierendes Merkmal auf. Insbesondere können die charakterisierenden Merkmale (z.B. Gravuren 30, Einkerbungen 31 und/oder anderweitige charakterisierende Merkmale) ausgelegt sein, so dass aus diesen eindeutig eine tatsächliche Lage und/oder Orientierung des zu messenden Gegenstands 1 ermittelbar ist. Beispielsweise können die charakterisierenden Merkmale hierzu drei unterschiedliche und/oder nicht-linear angeordnete charakterisierende Merkmale aufweise. Beispielsweise kann auch eine Form des zu messenden Gegenstands 1 bzw. eine Form der Oberfläche des zu messenden Gegenstands 1 als ein charakterisierendes Merkmal umfasst sein.

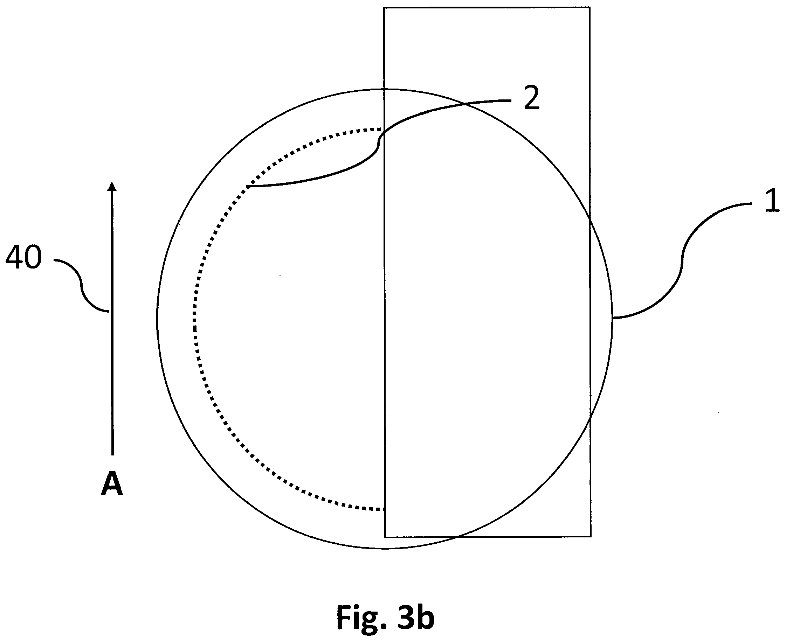

Figur 3b zeigt eine schematische Darstellung eines zu messenden Gegenstands 1 mit einer beispielhaften weiteren Anordnung einer Messstrecke 2 zur Aufnahme einer Streckenreflexionsmessung.

Die Messstrecke 2 ist hierbei insbesondere eine Messstrecke 2, welche im Wesentlichen halbkreisförmig entlang des bzw. in der Nähe des Randes des zu messenden Gegenstands 1 angeordnet ist. Die halbkreisförmige Messstrecke 2 ist hierbei vorzugsweise entlang der Auszugsrichtung 40 orientiert. Hierdurch kann eine besonders gute Berücksichtigung eines sich entlang der Auszugsrichtung 40 ausgebildeten Lackkeils, welcher Interferenz-Erscheinungen maßgeblich hervorruft bzw. beeinflusst, ermöglicht werden.

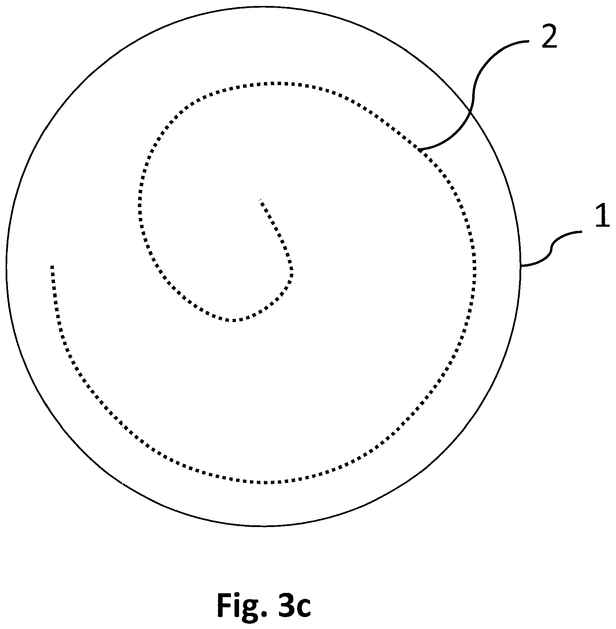

Figur 3c zeigt eine schematische Darstellung eines zu messenden Gegenstands 1 mit einer beispielhaften Anordnung einer Messstrecke 2, die im Wesentlichen einer gedachten Spiralform folgt, zur Aufnahme einer Streckenreflexionsmessung.

Die Anordnungen von Messstrecken 2 sind nicht auf die in den Figuren 2 bis 3c gezeigten Anordnungen beschränkt. Es können zum Beispiel die Messstrecken 2 anders angeordnet und/oder geformt sein. Beispielsweise können die Messstrecken 2 in einer elliptischen oder einer anderen geeigneten Form angeordnet sein.

Des Weiteren kann der zu messende Gegenstand 1 anstelle von oder zusätzlich zu den Einkerbungen 31 und/oder den Gravuren 30 andere Elemente aufweisen, die als charakteristische Merkmale des zu messenden Gegenstands 1 dienen können. Die zu messende Oberfläche des zu messenden Gegenstands 1 kann eine bereits fertige, optisch wirksame Fläche des zu messenden Gegenstands 1 bzw. eines Brillenglases sein. Die andere Oberfläche, die gegenüber der zu messenden Oberfläche des zu messenden Gegenstands 1 bzw. des Brillenglases liegt, kann ebenfalls eine bereits fertige, optisch wirksame Fläche sein, oder eine noch nicht fertig bearbeitete Fläche (wie in einem Brillenglashalbfertigprodukt oder Blank). Die zu messende Oberfläche kann die Vorder- oder die Rückfläche des zu messenden Gegenstands 1 sein.

Ferner kann anstelle des zu messenden Gegenstands 1 ein Brillenglas, eine andere optische Linse oder ein anderer Gegenstand sein, der zumindest teilweise reflektierend ist.

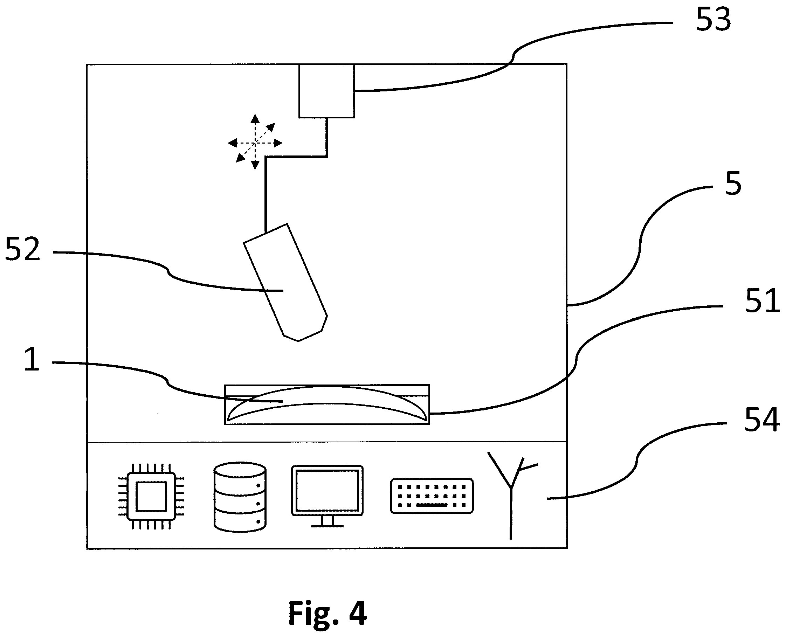

Figur 4 zeigt eine schematische Ansicht einer ersten beispielhaften Vorrichtung zur Reflexionsmessung 5. Die Vorrichtung zur Reflexionsmessung 5 ist vorzugsweise ausgebildet, ein Verfahren gemäß den obigen Aspekten und Beispielen durchzuführen. Mit der beispielhaften Vorrichtung zur Reflexionsmessung 5 ist es insbesondere möglich, eine interferenzreduzierte oder im Wesentlichen interferenzfreie Reflexionsmessung eines zu messenden Gegenstands 1 durchzuführen.

Die Vorrichtung zur Reflexionsmessung 5 weist eine Aufnahme 51 für ein Brillenglas, als einen bevorzugten zu messenden Gegenstand 1, eine Reflexionserfassungseinheit 52 und eine Steuerungseinheit 54 auf.

Die Aufnahme 51 kann hierbei spezifisch für einen bestimmten zu messenden Gegenstand 1, z.B. ein bestimmtes Brillenglas, ausgebildet sein. Alternativ kann die Aufnahme 51 anpassbar ausgebildet sein, um verschiedene zu messende Gegenstände 1 aufzunehmen. Beispielsweise kann die Aufnahme 51 ein oder mehrere Stellelemente, z.B. Greifelemente, aufweisen, wobei die Stellelemente ausgelegt sind, einen zu messenden Gegenstand 1 zu greifen und in der Aufnahme 51 lösbar bzw. temporär zu fixieren. Beispielsweise kann die Aufnahme 51 als eine Robotergreifeinheit ausgebildet sein.

Zur Veränderung der relativen Position zwischen Reflexionserfassungseinheit 52 und zu messendem Gegenstand 1 weist die Vorrichtung zur Reflexionsmessung 5 in dieser Ausführungsform eine Aktuatoreinheit 53 auf, welche geeignet ist, Steuerbefehle der Steuerungseinheit 54 zu empfangen und in eine mechanische, relative Bewegung umzusetzen. Die mechanische, relative Bewegung führt in dieser Ausführung dazu, dass die Reflexionserfassungseinheit 52 relativ zum zu messenden Gegenstand 1 bewegt wird. Die Freiheitgrade der relativen Bewegung sind exemplarisch als drei gestrichelt gezeichnete Bewegungsachsen dargestellt. Alternativ kann die Aktuatoreinheit 53 ausgelegt sein, eine relative Bewegung mit weniger (z.B. eine ein-dimensionale relative Bewegung) oder mehr (z.B. mit zusätzlichen relativen Rotationsbewegungen) Freiheitsgraden zu erzeugen.

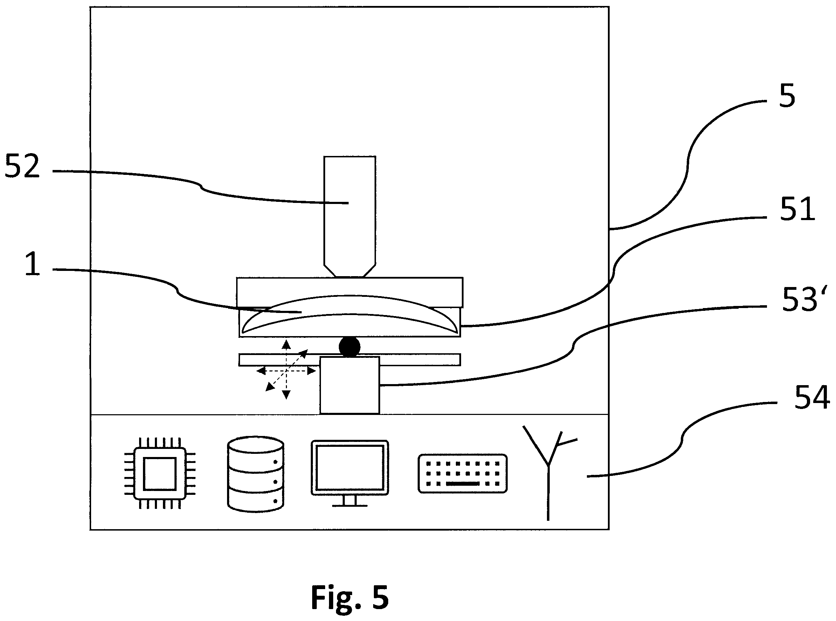

Figur 5 zeigt eine schematische Schnittzeichnung einer zweiten beispielhaften Vorrichtung zur Reflexionsmessung 5. Der Aufbau der in Figur 5 gezeigten Vorrichtung zur Reflexionsmessung 5 ist ähnlich dem Aufbau der in Figur 4 gezeigten Vorrichtung zur Reflexionsmessung 5. Auf die Beschreibung der einzelnen Komponenten wird daher auf die Beschreibung der Figur 4 verwiesen.

Wie bei der in der Figur 4 gezeigten Vorrichtung 5 kommt bei der in Figur 5 gezeigten Vorrichtung 5 zur Veränderung der relativen Position zwischen der Reflexionserfassungseinheit 52 und dem zu messendem Gegenstand 1 (exemplarisch gezeigt als ein Brillenglas) eine Aktuatoreinheit 53' zum Einsatz, welche geeignet bzw. ausgebildet ist, Steuerbefehle der Steuerungseinheit 54 zu empfangen und in eine mechanische Bewegung umzusetzen. Im Unterschied zur Vorrichtung 5 aus Figur 4 führt diese relative Bewegung dazu, dass der zu messende Gegenstand 1 relativ zur Reflexionserfassungseinheit 52 bewegt wird. Die Freiheitgrade der relativen Bewegung sind exemplarisch als drei gestrichelt gezeichnete Bewegungsachsen dargestellt. Alternativ kann die Aktuatoreinheit 53' ausgelegt sein, eine relative Bewegung mit weniger (z.B. eine ein-dimensionale relative Bewegung) oder mehr (z.B. mit zusätzlichen relativen Rotationsbewegungen) Freiheitsgraden zu erzeugen.

Hierbei ist die vorliegende Offenbarung jedoch nicht nur auf die beispielhafte Aktuatoreinheit 53 oder die beispielhafte Aktuatoreinheit 53' beschränkt. Insbesondere könnte in einer exemplarischen Vorrichtung zur Reflexionsmessung 5 sowohl die Aktuatoreinheit 53 als auch die Aktuatoreinheit 53' vorgesehen sein. Mit anderen Worten kann die Vorrichtung zur Reflexionsmessung 5 eine erste Aktuatoreinheit 53 aufweisen, welche ausgelegt ist, Steuerbefehle der Steuerungseinheit 54 zu empfangen und in eine erste mechanische Bewegung der Reflexionserfassungseinheit 52 (beispielsweise relativ zu einem Koordinatensystem bzw. Koordinatenursprung der Vorrichtung zur Reflexionsmessung 5) umzusetzen. Ferner kann die Vorrichtung zur Reflexionsmessung 5 eine zweite Aktuatoreinheit 53' aufweisen, welche ausgelegt ist, Steuerbefehle der Steuerungseinheit 54 zu empfangen und in eine zweite mechanische Bewegung des zu messende Gegenstand 1 (beispielsweise relativ zu einem Koordinatensystem bzw. Koordinatenursprung der Vorrichtung zur Reflexionsmessung 5) umzusetzen. Durch entsprechende Ansteuerung durch die Steuerungseinheit 54 bzw. durch entsprechende Steuerbefehle kann somit eine relative Bewegung zwischen Reflexionserfassungseinheit 52 und zu messendem Gegenstand 1 erzeugt bzw. bewirkt werden.

Durch ein solches Vorsehen einer ersten Aktuatoreinheit 53 und einer zweiten Aktuatoreinheit 53' kann eine höhere relative Geschwindigkeit zwischen der Reflexionserfassungseinheit 52 und dem zu messenden Gegenstand 1 erreicht werden. Ferner kann es hierdurch ermöglicht werden, auch sperrige zu messende Gegenstände 1 zu vermessen und/oder die Platzerfordernisse der exemplarischen Vorrichtung zur Reflexionsmessung 5 zu reduzieren.

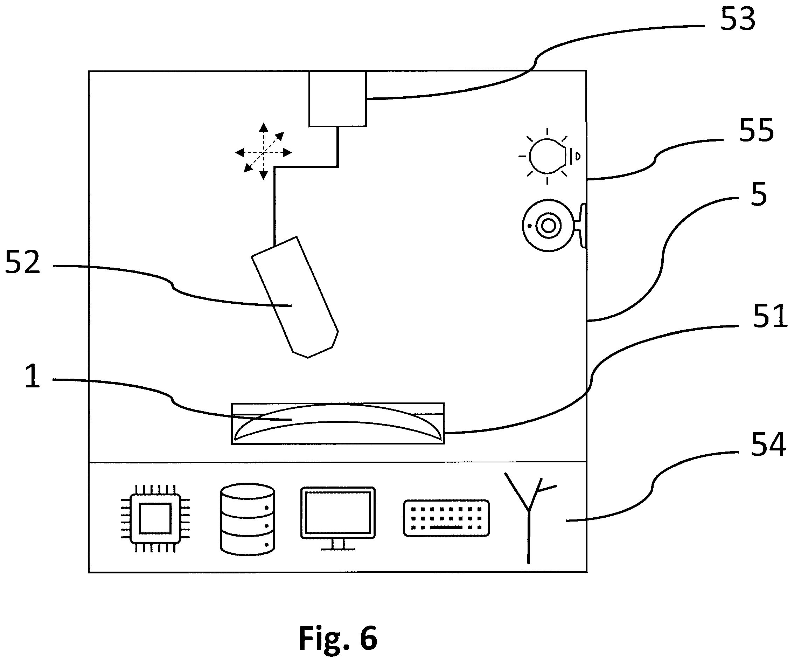

Figur 6 zeigt eine schematische Schnittzeichnung einer dritten beispielhaften Vorrichtung zur Reflexionsmessung 5. Der Aufbau der in Figur 6 gezeigten Vorrichtung zur Reflexionsmessung 5 ist ähnlich dem Aufbau der in den Figuren 4 und 5 gezeigten Vorrichtungen zur Reflexionsmessung 5. Auf die Beschreibung der einzelnen Komponenten wird daher auf die Beschreibung der Figuren 4 und 5 verwiesen.

Die in der Figur 6 gezeigte Vorrichtung zur Reflexionsmessung 5 umfasst zusätzlich eine Positionserfassungseinheit 55 zur Erfassung einer Lage und/oder Orientierung des zu messenden Gegenstands 1 (zum Beispiel eines Brillenglases). Die Erfassung der Lage und/oder Orientierung des zu messenden Gegenstands 1 kann wie oben beschrieben anhand zumindest eines charakteristischen Merkmals des Gegenstands (wie zum Beispiel der Einkerbung 31 und/oder der Gravuren 30) erfolgen. In diesem Beispiel umfasst die Positionserfassungseinheit 55 eine Kamera in Kombination mit einer Lichtquelle. Der mittels der Lichtquelle beleuchtete zu messende Gegenstand 1 wird durch die Kamera als zumindest ein aufgenommenes Bild erfasst. Das zumindest eine aufgenommene Bild wird anschließend in der Steuerungseinheit 54 oder in der Positionserfassungseinheit 55 selbst verarbeitet, um die Position und/oder Lage des zu messenden Gegenstands 1 zu bestimmen.

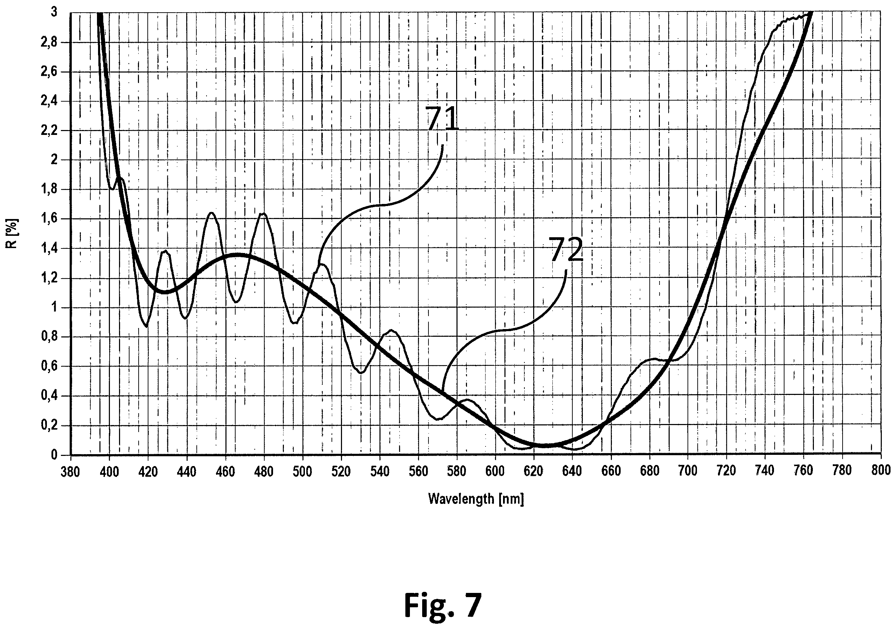

Figur 7 zeigt eine Reflexions-Wellenlängen-Darstellung der beispielhaften Vergleichs-Reflexionsmessung 71 aus Figur 1 und eine resultierende Reflexionsmessung 72 gemäß der vorliegenden Offenbarung. Auf der Abszisse ist die Wellenlänge in [nm] und auf der Ordinate der Reflexionswert R in [%] aufgetragen. Vergleichs-Reflexionsmessung 71 und resultierende Reflexionsmessung 72 sind hierbei an gleichartig beschaffenen zu vermessenden Gegenständen 1 vorgenommen worden.

Es ist ersichtlich, dass die resultierende Reflexionsmessung 72 gemäß dem hierin beschriebenen Verfahren zur Reflexionsmessung eine deutliche Verbesserung gegenüber der Vergleichs-Reflexionsmessung 71 darstellt.

Insbesondere ist erkenntlich, dass durch das erfindungsgemäße Verfahren eine (weitgehend) Interferenz-befreite, resultierende Reflexionsmessung 72 bereitgestellt wird. Eine derartige, verbesserte Reflexionsmessung 72 ermöglicht beispielsweise ein verbessertes und genaueres Erkennen von Maxima und Minima. So ist in der Reflexionsmessung 72 beispielsweise deutlich erkennbar, dass ein lokales Reflektivitätsmaximum bei ca. 460 nm und ein lokales Reflektivitätsminimum bei ca. 630 nm vorliegt. Aus der Vergleichs-Reflexionsmessung 71 gemäß dem Stand der Technik sind beispielsweise die Lagen dieser Extrempunkte nicht zweifelsfrei erkennbar und/oder sind aufgrund der Interferenzmodulation bei anderen Wellenlängen die jeweiligen Extrempunkte zu verordnen.

Vorstehend wurden bevorzugte Ausführungsvarianten der Erfindung anhand von Beispielen beschrieben. Einzelelemente der beschriebenen Ausführungsvarianten sind nicht auf die jeweilige Ausführungsvariante beschränkt. Vielmehr können Elemente der Ausführungsvarianten beliebig miteinander kombiniert werden und neue Ausführungsvarianten dadurch erstellt werden. Ferner können einzelne Merkmale abgeändert werden.

Beispielsweise können andere geeignete Anordnungen von Messpositionen, andere geeignete charakteristische Merkmale, andere geeignete Aktuatoren, andere geeignete Berechnungsverfahren einer resultierenden Reflexionsmessung und/oder Verfahren zum Bestimmen und gegebenenfalls Korrigieren der Position des zu messenden Objekts, etc. verwendet werden.

### Bezugszeichenliste

- 1: zu messender Gegenstand (beispielsweise Brillenglas)
- 2: Messstrecke
- 5: Vorrichtung zur Reflexionsmessung
- 20a, 20b: Endpunkt
- 30: Gravur (beispielhaftes charakteristisches Merkmal)
- 31: Einkerbung (beispielhaftes charakteristisches Merkmal)
- 40: Auszugsrichtung
- 51: Aufnahme
- 52: Reflexionserfassungseinheit
- 53, 53': Aktuatoreinheit
- 54: Steuerungseinheit
- 55: Positionserfassungseinheit
- 71: Vergleichs-Reflexionsmessung
- 72: resultierende Reflexionsmessung

## Patentansprüche

1. Verfahren zur Reflexionsmessung mittels einer Reflexionserfassungseinheit (52) an einer Oberfläche eines zu messenden Gegenstands (1), wobei das Verfahren umfasst:
Aufnehmen einer Streckenreflexionsmessung entlang einer Messstrecke (2) entlang der Oberfläche mittels der Reflexionserfassungseinheit (52) zur Erzeugung eines kumulierten Reflexions-Messsignals; und
Bereitstellen des erzeugten kumulierten Reflexions-Messsignals als eine resultierende Reflexionsmessung,
wobei das Aufnehmen der Streckenreflexionsmessung ein Erzeugen einer relativen Bewegung zwischen der Reflexionserfassungseinheit (52) und der Oberfläche entlang der Messstrecke umfasst,
wobei der zu messende Gegenstand ein optischer Gegenstand, bevorzugt eine Linse, ist, und
wobei die resultierende Reflexionsmessung direkt dem kumulierten Reflexions-Messsignal entspricht.

2. Verfahren zur Reflexionsmessung nach Anspruch 1, ferner umfassend:
Festlegen zumindest eines Messparameters,
wobei das Aufnehmen der Streckenreflexionsmessung ein Aufnehmen der Streckenreflexionsmessung basierend auf dem zumindest einen Messparameter ist.

3. Verfahren zur Reflexionsmessung nach Anspruch 2, wobei die Reflexionserfassungseinheit (52) einen Sättigungsschwellenwert aufweist, wobei das Festlegen zumindest eines Messparameters umfasst:
Festlegen des zumindest einen Messparameters derart, dass während der Aufnahme der Streckenreflexionsmessungen basierend auf dem zumindest einen Messparameter der Sättigungsschwellenwert nicht überschritten wird.

4. Verfahren zur Reflexionsmessung nach Anspruch 2 oder 3, wobei die Reflexionserfassungseinheit (52) eine Lichtquelle zur Bestrahlung der Oberfläche während dem Aufnehmen der Streckenreflexionsmessung aufweist, wobei der zumindest eine Messparameter eine Lichtquellenintensität umfasst; und/oder
wobei die Reflexionserfassungseinheit (52) einen Detektor zur Detektion von reflektiertem Licht von der Oberfläche während dem Aufnehmen der Streckenreflexionsmessung aufweist, wobei der zumindest eine Messparameter eine Lichtintensitätsreduktion des auf den Detektor einfallenden, reflektierten Lichts umfasst.

5. Verfahren zur Reflexionsmessung nach einem der Ansprüche 2 bis 4, wobei der zumindest eine Messparameter einen oder mehrere der folgenden Messparameter aufweist:
einen Reflexionsgrad der Oberfläche;
eine Form der Messstrecke (2);
eine Länge der Messstrecke (2);
einen Startpunkt und/oder einen Endpunkt der Messstrecke (2);
eine Messdauer der Streckenreflexionsmessung für die Messstrecke (2);
eine Geschwindigkeit der relativen Bewegung.

6. Verfahren zur Reflexionsmessung nach einem der vorangegangenen Ansprüche, ferner umfassend:
Bestimmen einer tatsächlichen Lage und/oder Orientierung des zu messenden Gegenstands (1) anhand von zumindest einem charakteristischen Merkmal (30, 31) des zu messenden Gegenstands (1).

7. Verfahren zur Reflexionsmessung nach Anspruch 6, ferner umfassend:
Bringen des zu messenden Gegenstands (1) in eine vorgegebene Lage und/oder Orientierung anhand der tatsächlichen Lage und/oder Orientierung des zu messenden Gegenstands (1); und/oder
Umrechnen einer Anordnung der Messstrecke (2) auf die tatsächliche Lage und/oder Orientierung des zu messenden Gegenstands (1).

8. Vorrichtung zur Reflexionsmessung (5) an einer Oberfläche eines zu messenden Gegenstands (1), eingerichtet zur Durchführung eines Verfahrens zur Reflexionsmessung gemäß einem der Ansprüche 1 bis 7, wobei die Vorrichtung umfasst:
eine Reflexionserfassungseinheit (52), welche ausgebildet ist, eine Streckenreflexionsmessung zur Erzeugung eines kumulierten Reflexions-Messsignals, insbesondere basierend auf zumindest einem Messparameter, aufzunehmen, wobei die Streckenreflexionsmessung entlang einer Messstrecke (2) entlang der Oberfläche aufgenommen wird; und
zumindest eine Aktuatoreinheit (53, 53'), welche ausgebildet ist, eine relative Bewegung zwischen der Reflexionserfassungseinheit (52) und dem zu messenden Gegenstand (1) entlang der Messstrecke (2) während der Streckenreflexionsmessung zu erzeugen,
wobei die Vorrichtung zur Reflexionsmessung (5) und/oder die Reflexionserfassungseinheit (52) ausgelegt ist, das erzeugte kumulierte Reflexions-Messsignal als eine resultierende Reflexionsmessung (72) bereitzustellen.

9. Vorrichtung zur Reflexionsmessung (5) gemäß Anspruch 8, wobei die Reflexionserfassungseinheit (52) einen Sättigungsschwellenwert aufweist, und
wobei die Reflexionserfassungseinheit (52) und/oder die Vorrichtung zur Reflexionsmessung (5) ausgelegt ist, den zumindest einen Messparameter derart festzulegen, dass während der Aufnahme der Streckenreflexionsmessung basierend auf dem zumindest einen Messparameter der Sättigungsschwellenwert nicht überschritten wird.

10. Vorrichtung zur Reflexionsmessung (5) gemäß Anspruch 8 oder 9, wobei die Vorrichtung zur Reflexionsmessung (5) ferner umfasst:
eine Aufnahme (51) für den zu messenden Gegenstand (1); und/oder
eine Recheneinheit zur Bestimmung des zumindest einen Messparameters und/oder zur Festlegung der Messstrecke (2) entlang der Oberfläche.

11. Vorrichtung zur Reflexionsmessung (5) nach einem der Ansprüche 8 bis 10, ferner umfassend eine Positionserfassungseinheit (55), welche konfiguriert ist, die tatsächliche Lage und/oder Orientierung des zu messenden Gegenstands (1) in der Vorrichtung zur Reflexionsmessung (5) zu bestimmen.

12. Vorrichtung zur Reflexionsmessung (5) nach einem der Ansprüche 8 bis 11, ferner umfassend:
eine Halterung, welche ausgebildet ist, mindestens einen Referenzgegenstand zu halten; und/oder
eine Vorbehandlungseinrichtung, in welcher der zu messende Gegenstand (1) vor der Aufnahme der Streckenreflexionsmessung vorbehandelt wird.

## Claims

1. A method for measuring reflection using a reflection detection unit (52) on a surface of an object (1) to be measured, the method comprising:
recording a path reflection measurement along a measurement path (2) along the surface using the reflection detection unit (52) to generate a cumulative reflection measurement signal; and
providing the generated cumulative reflection measurement signal as a resultant reflection measurement,
wherein the acquisition of the path reflection measurement comprises generating relative motion between the reflection detection unit (52) and the surface along the measurement path,
wherein the object to be measured is an optical object, preferably a lens, and
wherein the resulting reflection measurement corresponds directly to the cumulative reflection measurement signal.

2. A method for measuring reflection according to claim 1, further comprising:
defining at least one measurement parameter,
wherein the acquisition of the path reflection measurement is an acquisition of the path reflection measurement based on the at least one measurement parameter.

3. A method for measuring reflection according to claim 2, wherein the reflection detection unit (52) has a saturation threshold, and wherein defining at least one measurement parameter comprises:
setting the at least one measurement parameter such that, during the acquisition of the path reflection measurements based on the at least one measurement parameter, the saturation threshold is not exceeded.

4. A method for measuring reflection according to claim 2 or 3, wherein the reflection detection unit (52) comprises a light source for illuminating the surface during the acquisition of the path reflection measurement, wherein the at least one measurement parameter comprises a light source intensity; and/or
wherein the reflection detection unit (52) comprises a detector for detecting light reflected from the surface during the acquisition of the path reflection measurement, wherein the at least one measurement parameter comprises a reduction in the light intensity of the reflected light incident on the detector.

5. A method for reflection measurement according to any one of claims 2 through 4, wherein the at least one measurement parameter comprises one or more of the following measurement parameters:
a reflectance of the surface;
a shape of the measurement path (2);
a length of the measurement path (2);
a starting point and/or an ending point of the measurement section (2);
a measurement duration of the path reflection measurement for the measurement path (2);
a relative velocity.

6. A method for reflection measurement according to one of the preceding claims, further comprising:
determining an actual position and/or orientation of the object (1) to be measured based on at least one characteristic feature (30, 31) of the object (1) to be measured.

7. A method for measuring reflection according to claim 6, further comprising:
positioning the object (1) to be measured in a predetermined position and/or orientation based on the actual position and/or orientation of the object (1) to be measured; and/or
converting a configuration of the measurement path (2) to the actual position and/or orientation of the object to be measured (1).

8. A reflection measurement device (5) for measuring the surface of an object (1) to be measured, configured to perform a reflection measurement method according to any one of claims 1 through 7, wherein the device comprises:
a reflection detection unit (52) configured to record a path reflection measurement to generate a cumulative reflection measurement signal, in particular based on at least one measurement parameter, wherein the path reflection measurement is recorded along a measurement path (2) along the surface; and
at least one actuator unit (53, 53') configured to generate a relative movement between the reflection detection unit (52) and the object (1) to be measured along the measurement path (2) during the path reflection measurement,
wherein the reflection measurement device (5) and/or the reflection detection unit (52) is configured to provide the generated cumulative reflection measurement signal as a resulting reflection measurement (72).

9. Reflection measurement device (5) according to claim 8, wherein the reflection detection unit (52) has a saturation threshold, and
wherein the reflection detection unit (52) and/or the reflection measurement device (5) is configured to set the at least one measurement parameter such that, during the acquisition of the path reflection measurement based on the at least one measurement parameter, the saturation threshold is not exceeded.

10. Reflection measurement device (5) according to claim 8 or 9, wherein the reflection measurement device (5) further comprises:
a holder (51) for the object (1) to be measured; and/or
a computing unit for determining the at least one measurement parameter and/or for defining the measurement path (2) along the surface.

11. A reflection measurement device (5) according to any one of claims 8 through 10, further comprising a position detection unit (55) configured to determine the actual position and/or orientation of the object (1) to be measured within the reflection measurement device (5).

12. A reflection measurement device (5) according to any one of claims 8 through 11, further comprising:
a holder configured to hold at least one reference object; and/or
a pretreatment device in which the object (1) to be measured is pretreated prior to the start of the path reflection measurement.

## Revendications

1. Procédé de mesure de réflexion à l'aide d'une unité de détection de réflexion (52) sur une surface d'un objet (1) à mesurer, le procédé comprenant:
l'acquisition d'une mesure de réflexion sur une distance de mesure (2) le long de la surface à l'aide de l'unité de détection de réflexion (52) afin de générer un signal de mesure de réflexion cumulé; et
la fourniture du signal de mesure de réflexion cumulé généré en tant que mesure de réflexion résultante,
l'acquisition de la mesure de réflexion en ligne comprenant la génération d'un mouvement relatif entre l'unité de détection de réflexion (52) et la surface le long de la ligne de mesure,
l'objet à mesurer étant un objet optique, de préférence une lentille, et
la mesure de réflexion résultante correspondant directement au signal de mesure de réflexion cumulé.

2. Procédé de mesure de réflexion selon la revendication 1, comprenant en outre:
la définition d'au moins un paramètre de mesure,
l'acquisition de la mesure de réflexion sur la distance consistant en une acquisition de la mesure de réflexion sur la distance sur la base dudit au moins un paramètre de mesure.

3. Procédé de mesure de réflexion selon la revendication 2, dans lequel l'unité de détection de réflexion (52) présente un seuil de saturation, la définition d'au moins un paramètre de mesure comprenant:
la définition dudit au moins un paramètre de mesure de telle sorte que, pendant l'acquisition des mesures de réflexion de trajet sur la base dudit au moins un paramètre de mesure, la valeur seuil de saturation ne soit pas dépassée.

4. Procédé de mesure de réflexion selon la revendication 2 ou 3, dans lequel l'unité de détection de réflexion (52) comporte une source lumineuse destinée à éclairer la surface pendant l'acquisition de la mesure de réflexion en ligne droite, ledit au moins un paramètre de mesure comprenant une intensité de la source lumineuse ; et/ou
dans lequel l'unité de détection de réflexion (52) comprend un détecteur destiné à détecter la lumière réfléchie par la surface pendant l'acquisition de la mesure de réflexion en ligne, le au moins un paramètre de mesure comprenant une réduction de l'intensité lumineuse de la lumière réfléchie incidente sur le détecteur.

5. Procédé de mesure de réflexion selon l'une des revendications 2 à 4, dans lequel ledit au moins un paramètre de mesure comprend un ou plusieurs des paramètres de mesure suivants:
un coefficient de réflexion de la surface;
une forme de la distance de mesure (2);
une longueur de la section de mesure (2);
un point de départ et/ou un point d'arrivée du tronçon de mesure (2);
une durée de mesure de la réflexion sur la distance de mesure (2);
une vitesse de déplacement relatif.

6. Procédé de mesure par réflexion selon l'une des revendications précédentes, comprenant en outre:
la détermination d'une position et/ou d'une orientation réelle de l'objet à mesurer (1) à l'aide d'au moins une caractéristique (30, 31) de l'objet à mesurer (1).

7. Procédé de mesure de réflexion selon la revendication 6, comprenant en outre:
la mise de l'objet à mesurer (1) dans une position et/ou une orientation prédéfinie sur la base de la position et/ou de l'orientation réelle de l'objet à mesurer (1); et/ou
la conversion d'une configuration de la distance de mesure (2) en fonction de la position et/ou de l'orientation réelle de l'objet à mesurer (1).

8. Dispositif de mesure de réflexion (5) sur une surface d'un objet à mesurer (1), conçu pour mettre en oeuvre un procédé de mesure de réflexion selon l'une des revendications 1 à 7, le dispositif comprenant:
une unité de détection de réflexion (52), qui est conçue pour enregistrer une mesure de réflexion sur une distance afin de générer un signal de mesure de réflexion cumulé , notamment sur la base d'au moins un paramètre de mesure, la mesure de réflexion sur une distance étant enregistrée le long d'une distance de mesure (2) suivant la surface; et
au moins une unité d'actionnement (53, 53') conçue pour générer un mouvement relatif entre l'unité de détection de réflexion (52) et l'objet à mesurer (1) le long du trajet de mesure (2) pendant la mesure de réflexion sur la distance,
le dispositif de mesure de réflexion (5) et/ou l'unité de détection de réflexion (52) étant conçu(e) pour fournir le signal de mesure de réflexion cumulé généré sous la forme d'une mesure de réflexion résultante (72).

9. Dispositif de mesure de réflexion (5) selon la revendication 8, dans lequel l'unité de détection de réflexion (52) présente un seuil de saturation, et
dans lequel l'unité de détection de réflexion (52) et/ou le dispositif de mesure de réflexion (5) est conçu pour définir ledit au moins un paramètre de mesure de telle sorte que, pendant l'enregistrement de la mesure de réflexion de trajet, la valeur seuil de saturation ne soit pas dépassée sur la base dudit au moins un paramètre de mesure.

10. Dispositif de mesure de réflexion (5) selon la revendication 8 ou 9, dans lequel le dispositif de mesure de réflexion (5) comprend en outre:
un support (51) destiné à l'objet à mesurer (1); et/ou
une unité de calcul destinée à déterminer ledit au moins un paramètre de mesure et/ou à définir le trajet de mesure (2) le long de la surface.

11. Dispositif de mesure de réflexion (5) selon l'une des revendications 8 à 10, comprenant en outre une unité de détection de position (55) qui est configurée pour déterminer la position et/ou l'orientation réelle de l'objet à mesurer (1) dans le dispositif de mesure de réflexion (5).

12. Dispositif de mesure de réflexion (5) selon l'une des revendications 8 à 11, comprenant en outre :
un support conçu pour maintenir au moins un objet de référence ; et/ou
un dispositif de prétraitement, dans lequel l'objet à mesurer (1) est prétraité avant l'acquisition de la mesure de réflexion en ligne droite.
